# EUROPEAN PATENT SPECIFICATION

(11) **EP 3 100 913 B1**
(45) Date of publication and mention of the grant of the patent: **06.01.2021**
(21) Application number: 16172437.2
(22) Date of filing: 01.06.2016
(51) Int. Cl.: B60R 1/00, G06F 3/01, H04N 5/232, G02B 7/00, H04N 7/00

(54) **VEHICLE DISPLAY APPARATUS AND VEHICLE INCLUDING THE SAME**
FAHRZEUGANZEIGEVORRICHTUNG UND FAHRZEUG DAMIT
APPAREIL D'AFFICHAGE DE VÉHICULE ET CE DERNIER

(30) Priority: 02.06.2015 KR 20150078167
(43) Date of publication of application: 07.12.2016
(73) Proprietor: LG ELECTRONICS INC., Yeongdeungpo-gu Seoul 07336 (KR)
(72) Inventor: Kim, Mingoo, 06772 Seoul (KR); Cho, Dongjun, 06772 Seoul (KR); Kim, Junghee, 06216 Seoul (KR)
(74) Representative: Frenkel, Matthias Alexander

(56) References cited:
- WO-A1-2005/021314
- WO-A1-2011/155878
- KR-A- 20120 042 171
- US-A1- 2005 154 505
- US-A1- 2014 139 669

## Description

### BACKGROUND OF THE INVENTION

### 1. Field of the invention

The present invention relates to a vehicle display apparatus and a vehicle including the same and, more particularly, to a vehicle display apparatus, which is capable of displaying an image of the view in front of a vehicle and traveling-related information on a display, which is located in the area corresponding to a driver's seat and a passenger seat, and a vehicle including the same.

### 2. Description of the Related Art

A vehicle is a device that transports a user in a desired direction. A representative example of the vehicle may be a car.

Meanwhile, in order to enhance the convenience of a user who uses the vehicle, the vehicle has been equipped with, for example, various sensors and electronic devices. In particular, various devices to enhance the traveling convenience of the user have been developed.

In US 2014/0139669 A1, a system and method for providing front-oriented visual information to vehicle driver are disclosed. This document provides a camera system installed on the front end of a vehicle, either on the left front, the right front, or both sides, that prevents accidents resulting from the driver's propensity to protrude into oncoming traffic to view that traffic.

The camera is linked via wired or wireless connection to an onboard computer and a commercially available navigation display that is placed within the passenger compartment of the vehicle. The driver reviews a visual description on the display of any oncoming traffic in the form of motor vehicles, pedestrians, cyclists, animals and the like on the navigation display via a single screen, split screen or alternating screens. The camera system is furnished with a speed sensor that detects when the vehicle reaches a threshold speed of 3 miles per hour to activate or de-activate the camera. This camera system can be retrofitted into older vehicles.

In KR 2010/0103703 A, a multi-format support for surface creation in a graphics processing system is disclosed. This document discloses various techniques for creating surfaces using the platform interface layer, which surfaces may have different format layouts for various different color spaces, such as the YCbCr color space. One example device includes a storage device configured to include surface information and one or more processors configured to generate a graphics surface within a color space using a platform interface layer. The platform interface layer exists between the client rendering application program interface (API) and the underlying native platform rendering API. The one or more processors are further configured to specify a format layout of the data associated with the surface in the color space using the platform interface layer and to store the format layout in the storage device. The format layout represents a layout of one or more color components of the data associated with the surface in the color space.

In WO 2011/155878, A1 a vehicle based display system and a method for operating the same are disclosed. The vehicle based display system comprises a driver head tracking system with a sensor (15) for monitoring the driver head position and/or gaze direction. The system also comprises a display (10) for displaying information to a driver of the vehicle, and a control unit (14) for controlling the display (10) to modify displayed information depending on the driver head position. The invention also relates to a method for operating the display system.

In US 2009/0040196 A1, a method of controlling the display of various data in a vehicle and opto-acoustic data unit are disclosed. The method and apparatus for controlling the display of various data on a dual view screen in a vehicle in which the line of view of a driver is continually monitored and which in response to the driver directing his line of view to the screen, renders visible to him data relevant to the operation of the vehicle while optionally rendering invisible data not relevant to the operation of the vehicle otherwise viewable only by a passenger.

In US 2005/0154505 A1, a vehicle information display system is disclosed. The vehicle information display system includes a head-up display for reflecting an image on a windshield of a vehicle and displaying the image
so that a driver recognizes the image as a virtual image. Information is collected for being displayed by the head-up display. A circumstance of the vehicle, a circumstance of surrounding of the vehicle, or a circumstance of the driver is detected. The collected information is classified in accordance with a detection result. Then, display contents of the head-up display are controlled in accordance with a classification result.

### SUMMARY OF THE INVENTION

Therefore, it is an object of the present invention to provide a vehicle display apparatus, which is capable of displaying an image of the view in front of a vehicle and traveling-related information on a display, which is located in the area corresponding to a driver's seat and a passenger seat, and a vehicle including the same.

The invention is defined by the appended claims.

In accordance with one embodiment of the present invention, the above and other objects can be accomplished by the provision of a vehicle display apparatus comprising a front camera configured to capture a forward view image in front of a vehicle; a display including a first area oriented toward a driver seat and a second area oriented toward a passenger seat; and a processor configured to provide, to the first area of the display, (i) the forward view image captured by the front camera and (ii) traveling guidance information or vehicle traveling information that is overlaid over the forward view image, wherein the processor is configured to reduce the size of the forward view image as the vehicle traveling speed increases, wherein the processor is configured to provide a visual content received from a mobile terminal of a passenger to the second area of the display when the passenger is present on the passenger seat, wherein the display is a curved display unit having at least one curvature, and wherein the first area of the display corresponding to the driver's seat has the smallest curvature.

In accordance with another embodiment of the present invention, there is provided a vehicle comprises a vehicle display apparatus, the vehicle display apparatus comprises: a front camera configured to capture a forward view image of a vehicle; a display disposed above a dashboard inside the vehicle, wherein the display includes a first area oriented to a driver seat and a second area oriented to a passenger seat; and a processor configured to provide, to the first area of the display, (i) the forward view image captured by the front camera and (ii) traveling guidance information or vehicle traveling information that is overlaid over the forward view image.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a conceptual view illustrating a vehicle communication system including a vehicle display apparatus according to an embodiment of the present invention;
FIG. 2A is a view illustrating one exemplary outer appearance of a vehicle illustrated in FIG. 1;
FIG. 2B is a view schematically illustrating positions of a plurality of cameras attached to the vehicle illustrated in FIG. 2A;
FIG. 2C is a view illustrating an around-view image based on images captured by the cameras illustrated in FIG. 2B;
FIGs. 3A and 3B are views illustrating a communication method between the vehicle display apparatus of FIG. 1 and an external apparatus;
FIGs. 4A and 4B are block diagrams illustrating various exemplary internal configurations of a vehicle display apparatus according to an embodiment of the present invention;
FIG. 5 is a block diagram illustrating the exemplary internal configuration of the vehicle of FIG. 1; and
FIGs. 6A to 15C are views referenced to explain various operating methods of a vehicle display apparatus according to an embodiment of the present invention.

### DETAILED DESCRIPTION OF THE PREFERRED EMBODIMENTS

Hereinafter, the present invention will be described in detail with reference to the accompanying drawings.

With respect to constituent elements used in the following description, suffixes "module" and "unit" are given or mingled with each other only in consideration of ease in the preparation of the specification, and do not have or serve as different meanings. Accordingly, the suffixes "module" and "unit" may be mingled with each other.

A vehicle as described in this specification may include a car and a motorcycle. Hereinafter, a description will be given based on a car.

Meanwhile, a vehicle as described in this specification may include a vehicle having an internal combustion engine as a power source, a hybrid vehicle having an internal combustion engine and an electric motor as a power source, and an electric vehicle having an electric motor as a power source, for example.

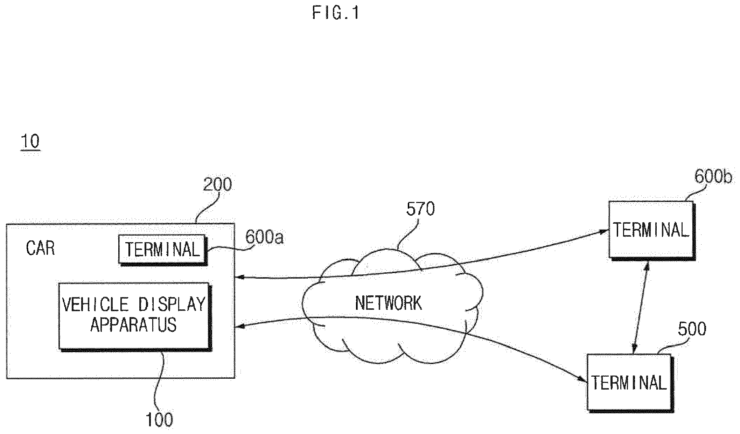

FIG. 1 is a conceptual view illustrating a vehicle communication system including a vehicle display apparatus according to an embodiment of the present invention.

Referring to FIG. 1, the vehicle communication system 1 may include a vehicle 200, terminals 600a and 600b, and a server 500.

The vehicle 200 may include a vehicle display apparatus 100 mounted therein and may exchange data with the terminals 600a and 600b or the server 500 via an internal communication unit (not illustrated) of the vehicle display apparatus 100. In particular, the vehicle 200 may exchange data with the terminal 600b or the server 500 via a network 570.

The terminals 600a and 600b may be fixed terminals such as TVs, or mobile terminals such as, for example, tablet PCs, wearable devices, or smart-phones. The following description will focus on the mobile terminals.

Meanwhile, the terminal 600a of a passenger occupying the vehicle 200, in particular, of a driver may communicate with the server 500 or the vehicle 200 and, in particular, may exchange data with the vehicle display apparatus 100 mounted inside the vehicle 200.

Meanwhile, the server 500 may be a server provided by the manufacturer of the vehicle, or a server managed by a provider that provides vehicle-related services. For example, the server 500 may be a server managed by a provider that provides information regarding, for example, road traffic conditions.

Meanwhile, the vehicle display apparatus 100 according to the embodiment of the present invention is configured to display, while the vehicle 200 is traveling, an image of the view in front of the vehicle (hereinafter briefly referred to as a vehicle front-view image 810), transmitted from a front camera 195d, in a first area corresponding to a driver's seat Std within the overall area of the display 180, and to further display at least one of traveling guidance information and vehicle traveling information so as to overlap the vehicle front-view image 810. As the display of the vehicle front-view image and the traveling-related information becomes possible, increased convenience of use may be realized.

In particular, the vehicle display apparatus 100 according to the embodiment of the present invention may display the vehicle front-view image via the display 180, which is located in the area corresponding to the driver's seat and the passenger seat, thereby enabling the seamless display of both the image and the visually perceivable view through the windshield.

Meanwhile, the vehicle display apparatus 100 according to the embodiment of the present invention may further display at least one of vehicle state information and an image of content, in addition to the vehicle front-view image, on the display 180, which is located in the area corresponding to the driver's seat and the passenger seat, thereby realizing the provision of various pieces of information.

Meanwhile, the vehicle display apparatus 100 according to the embodiment of the present invention may control an indoor camera such that the vehicle front-view image is displayed in consideration of the driver's eye level, thereby achieving an enhanced augmented reality function.

Meanwhile, the vehicle display apparatus 100 according to the embodiment of the present invention may display an image, captured by a rear camera, in the first area corresponding to the driver's seat within the overall display area, thereby increasing the convenience of use by the driver.

Meanwhile, the vehicle display apparatus 100 according to the embodiment of the present invention may display an image of content, which is being played back, in a second area corresponding to the passenger seat within the overall display area, thereby increasing the convenience of use by the passenger.

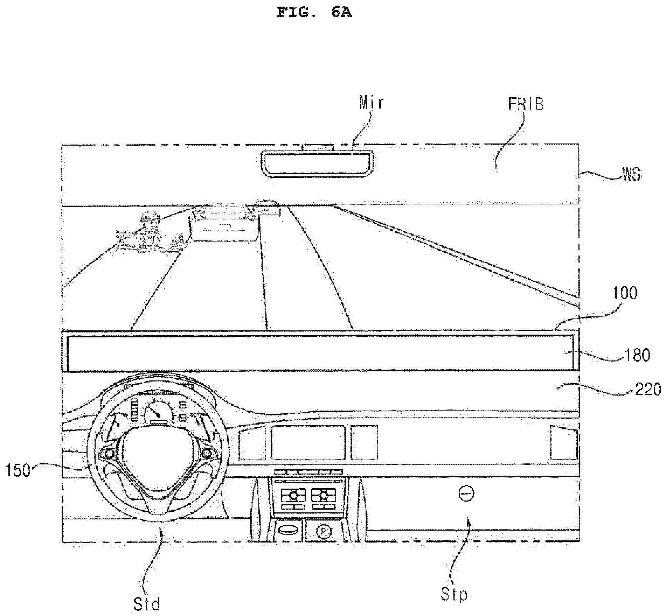

Hereinafter, various embodiments of the present invention will be described in more detail with reference to FIG. 6A and the following drawings.

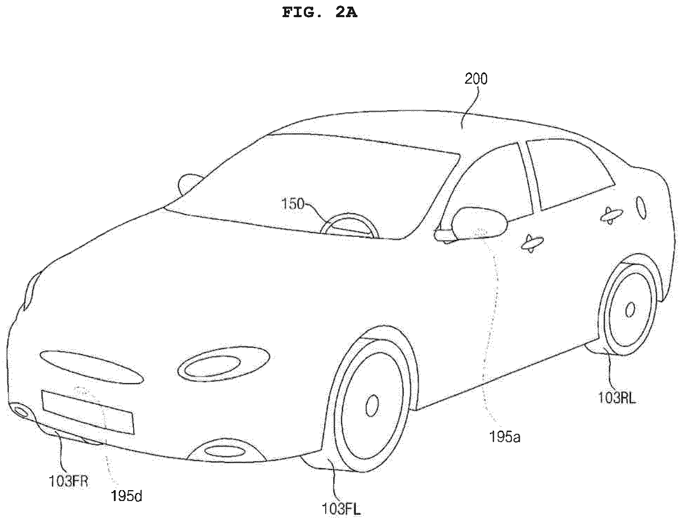

FIG. 2A is a view illustrating on exemplary external appearance of the vehicle of FIG. 1.

Referring to FIG. 2A, the vehicle, designated by reference numeral 200, may include wheels 103FR, 103FL, 103RR and 103RL, which are rotated by a power source, a steering wheel 150 to adjust the heading direction of the vehicle 200, and a plurality of cameras 195a, 195b, 195c and 195d mounted to the vehicle 200. Meanwhile, in FIG. 1, for convenience of illustration, only a left camera 195a and a front camera 195d are illustrated.

Meanwhile, the cameras 195a, 195b, 195c and 195d may be around-view cameras to provide around-view images.

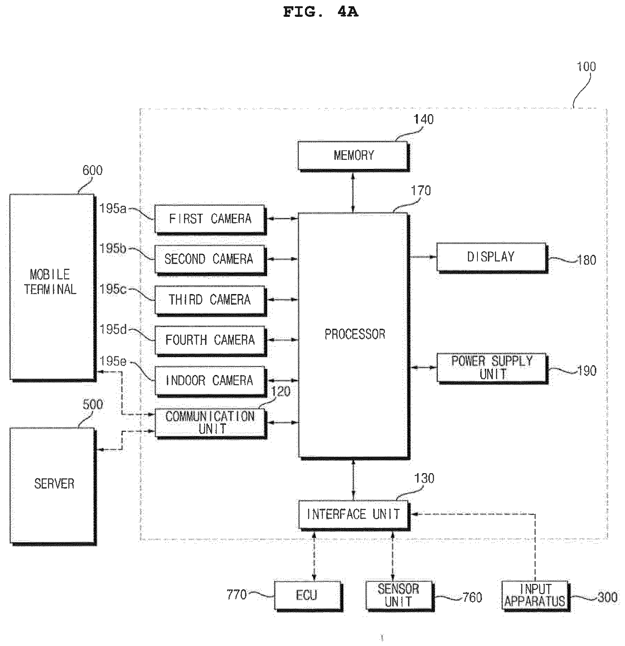

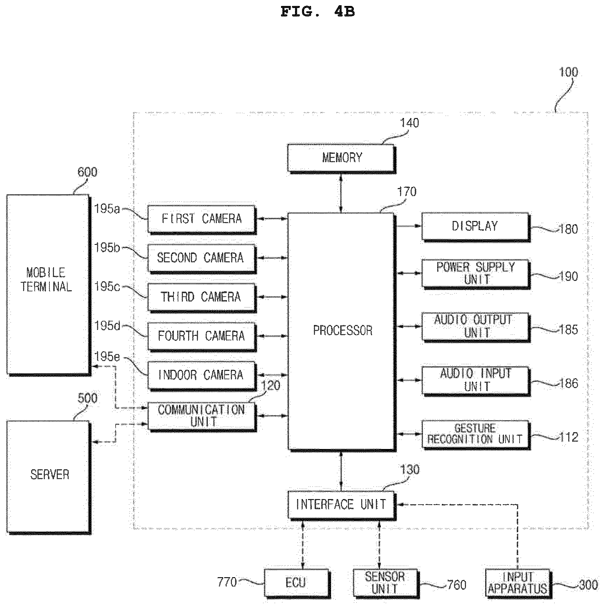

For example, the cameras 195a, 195b, 195c and 195d may be activated to capture images respectively when a vehicle speed is a prescribed speed or lower or when the vehicle moves into reverse. The images captured by the cameras 195a, 195b, 195c and 195d may be signal-processed in the vehicle display apparatus 100 (see FIG. 4A or FIG. 4B) .

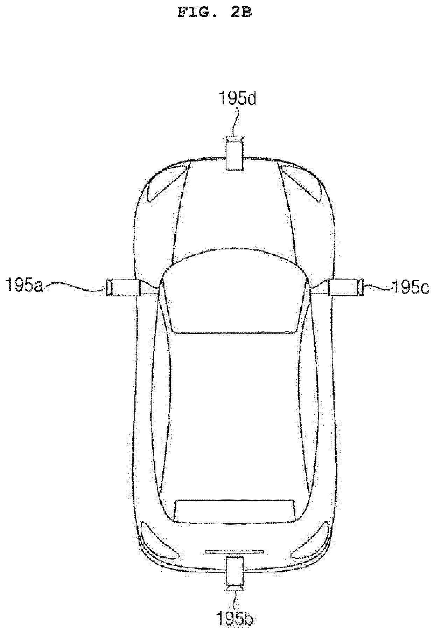

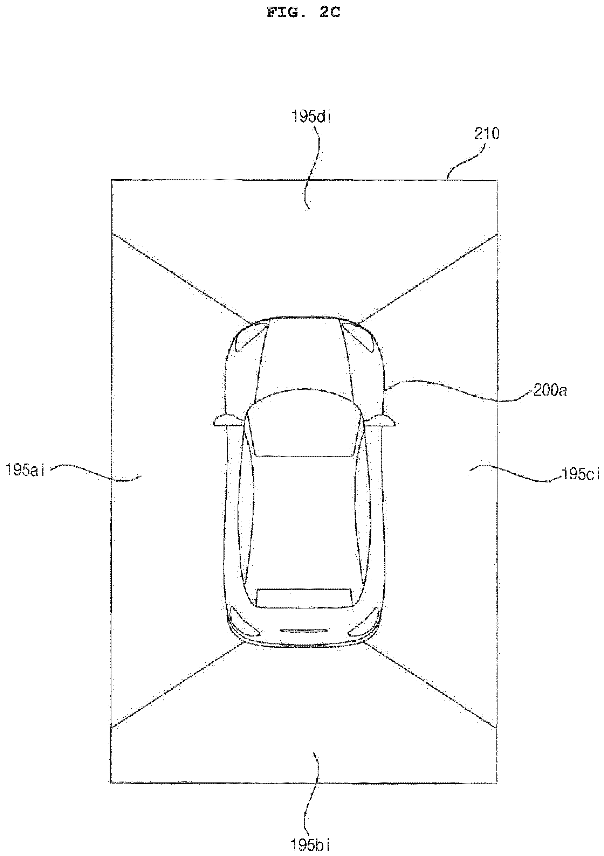

FIG. 2B is a view schematically illustrating positions of the cameras attached to the vehicle illustrated in FIG. 2A, and FIG. 2C is a view illustrating an around-view image based on images captured by the cameras illustrated in FIG. 2B.

First, referring to FIG. 2B, the cameras 195a, 195b, 195c and 195d may be located respectively on the left side, the rear side, the right side, and the front side of the vehicle.

In particular, the left camera 195a and the right camera 195c may be located respectively in a case enclosing a left side view mirror and a case enclosing a right side view mirror.

Meanwhile, the rear camera 195b and the front camera 195d may be located respectively near a trunk switch and at or near an emblem.

Meanwhile, among the cameras 195a, 195b, 195c and 195d, the front camera 195d may be continuously activated while the vehicle 200 is traveling. As such, the front camera 195d may capture a vehicle front-view image.

Meanwhile, while the vehicle 200 is traveling, the left camera 195a and the right camera 195c may also be activated. As such, the left camera 195a and the right camera 195c may respectively capture images of the views at the left side and the right side of the vehicle (hereinafter referred to as a vehicle left-view image and a vehicle right-view image respectively).

Meanwhile, while the vehicle 200 is traveling, the rear camera 195b may also be activated. As such, the rear camera 195b may capture an image of the view in rear of the vehicle (hereinafter referred to as a vehicle rear-view image).

Meanwhile, the vehicle display apparatus 100 may enter an around-view mode when the traveling speed of the vehicle is a prescribed speed or lower, or when the vehicle moves into reverse.

In the around-view mode, the respective images captured by the cameras 195a, 195b, 195c and 195d may be transmitted to, for example, a processor (170 of FIG. 4A or FIG. 4B) provided in the vehicle 200. The processor (170 of FIG. 4A or FIG. 4B) may generate a so-called around-view image by combining the images with one another.

FIG. 2C illustrates one example of an around-view image 210. The around-view image 210 may include a first image region 195ai of the left camera 195a, a second image region 195bi of the rear camera 195b, a third image region 195ci of the right camera 195c, and a fourth image region 195di of the front camera 195d.

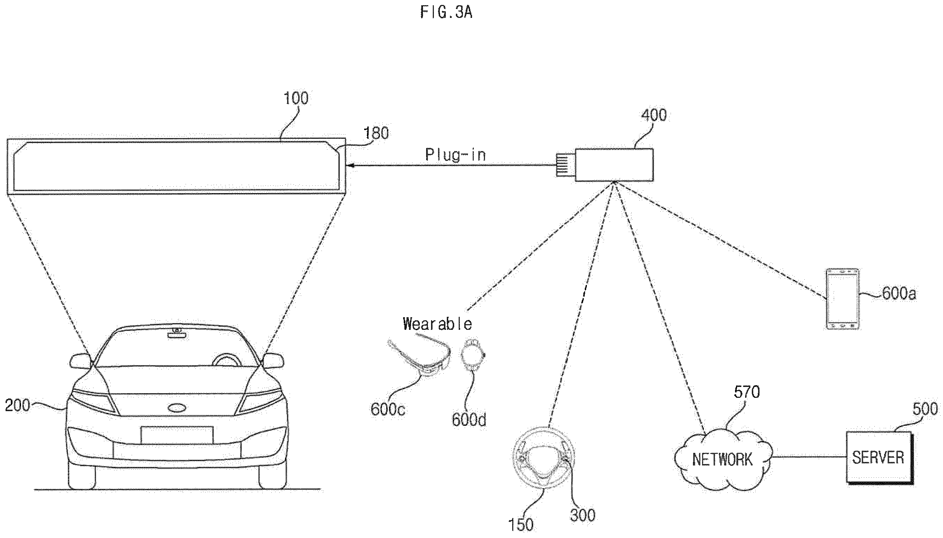

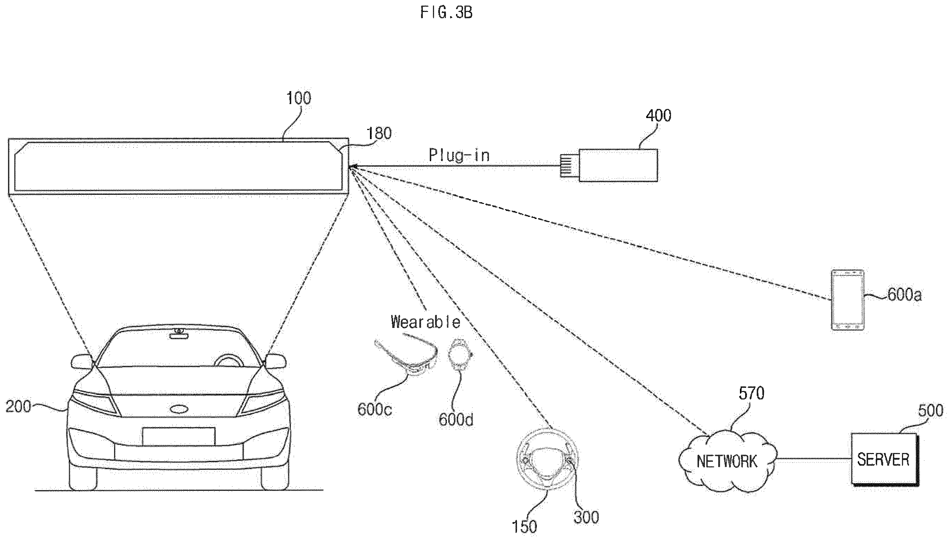

FIGs. 3A and 3B are views illustrating a communication method between the vehicle display apparatus of FIG. 1 and an external apparatus.

FIGs. 3A and 3B illustrate the display apparatus 100 including the display 180, which is located on the windshield or dashboard inside the vehicle 200 at a position corresponding to the driver's seat Std and the passenger seat Stp.

First, referring to FIG. 3A, an interface unit (130 of FIGs. 4A and 4B) of the display apparatus 100 may be connected to an external apparatus in a wired or wireless manner.

For example, as illustrated in FIG. 3A, the display apparatus 100 may be connected to a portable storage apparatus 400 in a wired manner.

The portable storage apparatus 400 may store various content data and may perform data communication with another external apparatus in a wireless manner.

As illustrated, the portable storage apparatus 400 may exchange data with a glass 600c, a wearable device such as a smart watch 600d, a mobile terminal 600a, an input apparatus 300 attached to the steering wheel 150, or the external server 500 in a wireless manner.

Through the wireless data communication function of the portable storage apparatus 400, the display apparatus 100 may exchange data with the glass 600c, the wearable device such as the smart watch 600d, the mobile terminal 600a, the input apparatus 300 attached to the steering wheel 150, or the external server 500 in a wireless manner.

Next, although similar to FIG. 3A, FIG. 3B has a difference in that the data communication function is performed via the communication unit (120 of FIGs. 4A and 4B) of the display apparatus 100, rather than the portable storage apparatus 400.

FIGs. 4A and 4B are block diagrams illustrating various exemplary internal configurations of the vehicle display apparatus according to an embodiment of the present invention.

The vehicle display apparatus 100, illustrated in FIGs. 4A and 4B, may display, while the vehicle is traveling, the vehicle front-view image 810 from the front camera 195d, in the first area corresponding to the driver's seat Std within the overall area of the display 180, and further display at least one of traveling guidance information and vehicle traveling information so as to overlap the vehicle front-view image 810.

Meanwhile, the vehicle display apparatus 100, illustrated in FIGs. 4A and 4B, may combine a plurality of images, received from the cameras 195a to 195d to generate an around-view image.

Meanwhile, the vehicle display apparatus 100 may perform object detection, verification, and tracking with respect to an object located near the vehicle based on a plurality of images received from the cameras 195a to 195d.

First, referring to FIG. 4A, the vehicle display apparatus 100 may include a communication unit 120, an interface unit 130, a memory 140, a processor 170, a display 180, a power supply unit 190, and a plurality of cameras 195a to 195e.

The communication unit 120 may exchange data with the mobile terminal 600 or the server 500 in a wireless manner. In particular, the communication unit 120 may exchange data with a mobile terminal of the driver in a wireless manner. To this end, various wireless data communication protocols such as, for example, Bluetooth, Wi-Fi, Wi-Fi direct, and APiX, may be used.

The communication unit 120 may receive schedule information regarding the vehicle driver's scheduled time or movement position, weather information and road traffic state information such as, for example, Transport Protocol Expert Group (TPEG) information, from the mobile terminal 600 or the server 500. Meanwhile, the vehicle display apparatus 100 may transmit real-time traffic information, acquired based on images, to the mobile terminal 600 or the server 500.

Meanwhile, when a user gets into the vehicle, the mobile terminal 600 of the user may pair with the vehicle display apparatus 100 in an automated manner, or as the user executes a pairing application.

The interface unit 130 may receive vehicle-related data, or externally transmit a signal processed or created by the processor 170. To this end, the interface unit 130 may perform data communication with, for example, an Electronic Control Unit (ECU) 770, a sensor unit 760, or the input apparatus 300 in a wired or wireless communication manner.

Meanwhile, the interface unit 130 may receive sensor information from the ECU 770 or the sensor unit 760.

Here, the sensor information may include at least one selected from among vehicle heading information, vehicle location information (GPS information), vehicle angle information, vehicle speed information, vehicle acceleration information, vehicle tilt information, vehicle front-view movement/backward movement information, battery information, fuel information, tire information, vehicle lamp information, vehicle interior temperature information, and vehicle interior humidity information.

Of the above-specified sensor information, for example, the vehicle heading information, the vehicle position information, the vehicle angle information, the vehicle speed information, and the vehicle tilt information, which are related to vehicle traveling, may be referred to as vehicle traveling information.

The memory 140 may store various data for the overall operation of the vehicle display apparatus 100 such as, for example, programs for the processing or control of the processor 170.

Meanwhile, the memory 140 may store map information regarding vehicle traveling.

The processor 170 controls the overall operation of each unit inside the vehicle display apparatus 100.

The processor 170 controls, while the vehicle is traveling, the display of the vehicle front-view image 810, transmitted from the front camera 195d, in the first area corresponding to the driver's seat Std within the overall area of the display 180, and further controls the display of at least one of traveling guidance information and vehicle traveling information so as to overlap the vehicle front-view image 810.

Meanwhile, the processor 170 may acquire a plurality of images from the cameras 195a to 195d and combine the acquired images with one another to generate an around-view image.

Meanwhile, the processor 170 may perform computer vision based signal processing. For example, the processor 170 may perform disparity calculation for the view around the vehicle based on the images or the generated around-view image, perform the detection of an object in the image based on calculated disparity information, and continuously track the motion of the object after the object detection.

In particular, during the object detection, the processor 170 may perform lane detection, adjacent vehicle detection, pedestrian detection, and road surface detection, for example.

In addition, the processor 170 may calculate the distance to, for example, the detected adjacent vehicle or the detected pedestrian.

Meanwhile, the processor 170 may receive sensor information from the ECU 770 or the sensor unit 760 through the interface unit 130. Here, the sensor information may include at least one selected from among vehicle heading information, vehicle location information (GPS information), vehicle angle information, vehicle speed information, vehicle acceleration information, vehicle tilt information, vehicle forward movement/backward movement information, battery information, fuel information, tire information, vehicle lamp information, vehicle interior temperature information, and vehicle interior humidity information.

The display 180 may display the around-view image generated by the processor 170. Meanwhile, during the display of the around-view image, the display 180 may provide various user interfaces, and include a touch sensor to sense a touch input to the user interface.

Meanwhile, the display 180 may include a cluster or Head Up Display (HUD) mounted at the front of the interior of the vehicle. In the case where the display 180 is the HUD, the display 180 may include a projection module to project an image on the front windshield glass of the vehicle 200.

The power supply unit 190 may supply electric power to the respective components under the control of the processor 170. In particular, the power supply unit 190 may receive electric power from an in-vehicle battery, for example.

Among the cameras 195a to 195e, the cameras 195a to 195d may be ones illustrated in FIG. 2B.

Meanwhile, among the cameras 195a to 195e, the camera 195e may be an indoor camera mounted inside the vehicle to capture an image of the interior of the vehicle.

Next, referring to FIG. 4B, although the vehicle display apparatus 100 of FIG. 4B is similar to the vehicle display apparatus 100 of FIG. 4A, the vehicle display apparatus 100 may include an input unit 110, an audio output unit 185, an audio input unit 186, and a gesture recognition unit 112. Hereinafter, a description will be given of only the input unit 110, the audio output unit 185, the audio input unit 186, and the gesture recognition unit 112.

The input unit 110 may include a plurality of buttons attached around the display 180, or a touchscreen disposed on the display 180. The vehicle display apparatus 100 may be powered on through the buttons or the touchscreen such that the vehicle display apparatus 100 can be operated. In addition, the input unit 110 may perform various other input operations.

The audio output unit 185 converts an electrical signal from the processor 170 into an audio signal to output the audio signal. To this end, the audio output unit 185 may include a speaker, for example. The audio output unit 185 may output sound corresponding to the operation of the input unit 110, i.e. the buttons.

The audio input unit 186 may receive user voice. To this end, the audio input unit 186 may include a microphone. The audio input unit 186 may convert the received voice into an electrical signal and transmit the electrical signal to the processor 170.

The gesture recognition unit 112 may recognize the gesture of the passenger occupying the vehicle.

For example, when the image of the view inside the vehicle captured by the indoor camera 195e is transmitted to the gesture recognition unit 112, the gesture recognition unit 112 may recognize the driver's gesture via image analysis.

In another example, when the gesture recognition unit 112 includes a proximity touch sensing unit (not illustrated), the gesture recognition unit 112 may recognize the driver's gesture via proximity touch recognition.

In a further example, the gesture recognition unit 112 includes a light receiving element (not illustrated) and a light transmitting element (not illustrated) arranged around the display 180, the gesture recognition unit 112 may recognize the driver's gesture based on an optical signal received from the light receiving element (not illustrated).

Meanwhile, the display apparatus 100 for the vehicle illustrated in FIGs. 4A and 4B may be an Audio Video Navigation (AVN) apparatus.

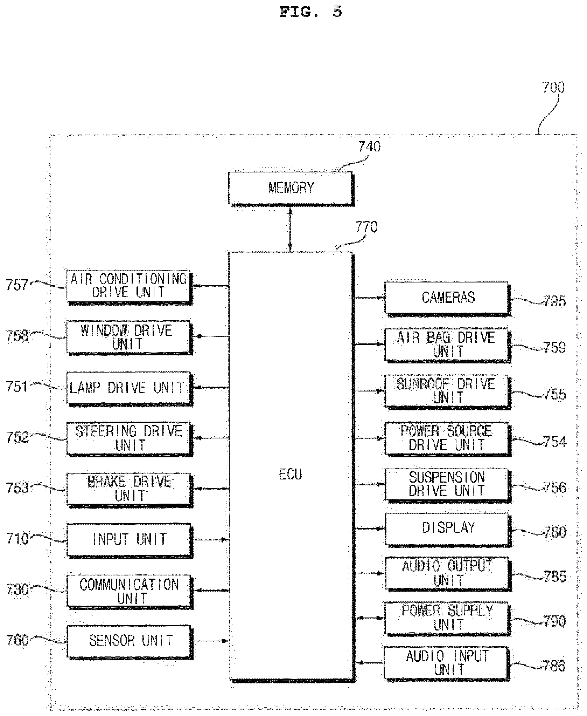

FIG. 5 is a block diagram illustrating the exemplary internal configuration of the vehicle of FIG. 1.

Referring to FIG. 5, the vehicle 200 may include an electronic control apparatus 700 for the control of the vehicle.

The electronic control apparatus 700 may include an input unit 710, a communication unit 730, a memory 740, a lamp drive unit 751, a steering drive unit 752, a brake drive unit 753, a brake drive unit 753, a power source drive unit 754, a sunroof drive unit 755, a suspension drive unit 756, an air conditioning drive unit 757, a window drive unit 758, an airbag drive unit 759, a sensor unit 760, an ECU 770, a display 780, an audio output unit 785, an audio input unit 786, a power supply unit 790, and a plurality of cameras 795.

Meanwhile, the ECU 770 may include the processor 170 described above with reference to FIG. 4A or 4B. Alternatively, in addition to the ECU 770, a separate processor may be provided to perform signal processing of an image from the camera.

The input unit 710 may include a plurality of buttons or a touchscreen located inside the vehicle 200. The input unit 710 may perform various input operations via the buttons or the touchscreen.

The communication unit 730 may exchange data with the mobile terminal 600 or the server 500 in a wireless manner. In particular, the communication unit 730 may exchange data with a mobile terminal of the driver in a wireless manner. To this end, various wireless data communication protocols such as, for example, Bluetooth, Wi-Fi, Wi-Fi direct, and APiX, may be used.

The communication unit 730 may receive schedule information regarding the vehicle driver's scheduled time or movement position, weather information and road traffic state information such as, for example, Transport Protocol Expert Group (TPEG) information, from the mobile terminal 600 or the server 500.

Meanwhile, when a user gets into the vehicle, the mobile terminal 600 of the user may pair with the electronic control apparatus 700 in an automated manner, or as the user executes a pairing application.

The memory 740 may store various data for the overall operation of the electronic control apparatus 700 such as, for example, programs for the processing or control of the ECU 770.

Meanwhile, the memory 740 may store map information regarding vehicle traveling.

The lamp drive unit 751 may turn at least one lamp arranged inside and outside the vehicle on or off. In addition, the lamp drive unit 754 may control, for example, the intensity and direction of light of the lamp. For example, the lamp drive unit 754 may perform control for a turn signal lamp or a brake lamp.

The steering drive unit 752 may perform electronic control of a steering apparatus (not illustrated) inside the vehicle 200. As such, the steering drive unit 752 may change the direction of travel of the vehicle 200.

The brake drive unit 753 may perform electronic control of a brake apparatus (not illustrated) inside the vehicle 200. For example, the brake drive unit 753 may reduce the speed of the vehicle 200 by controlling the operation of brakes located at wheels. In another example, the brake drive unit 753 may adjust the heading direction of the vehicle 200 leftward or rightward by differentiating the operation of respective brakes located at left and right wheels.

The power source drive unit 754 may perform the electronic control of a power source inside the vehicle 200.

For example, when a fossil fuel based engine (not illustrated) is a power source, the power source drive unit 754 may perform electronic control of the engine. As such, the power source drive unit 751 may control, for example, an output torque of the engine.

In another example, when an electric motor (not illustrated) is a power source, the power source drive unit 754 may perform control of the motor. As such, the power source drive unit 751 may control, for example, the RPM and torque of the motor.

The sunroof drive unit 755 may perform electronic control of a sunroof apparatus (not illustrated) inside the vehicle 200. For example, the sunroof drive unit 755 may control the opening or closing of a sunroof.

The suspension drive unit 756 may perform the electronic control of a suspension apparatus (not illustrated) inside the vehicle 200. For example, when the road surface is uneven, the suspension drive unit may control the suspension apparatus to reduce vibration of the vehicle 200.

The air conditioning drive unit 757 may perform the electronic control of an air conditioner (not illustrated) inside the vehicle 200. For example, when the interior temperature of the vehicle is high, the air conditioning drive unit 757 may operate an air conditioner to supply cold air to the interior of the vehicle.

The window drive unit 758 may perform the electronic control of a window apparatus (not illustrated) inside the vehicle 200. For example, the window drive unit 758 may control the opening or closing of left and right windows of the vehicle 200.

The airbag drive unit 759 may perform the electronic control of an airbag apparatus inside the vehicle 200. For example, the airbag drive unit 759 may control an airbag to be deployed in a dangerous situation.

The sensor unit 760 senses, for example, signals related to the traveling of the vehicle 200. To this end, the sensor unit 760 may include, for example, a heading sensor, a yaw sensor, a gyro sensor, a position module, a vehicle forward/backward movement sensor, a wheel sensor, a vehicle speed sensor, a vehicle body gradient sensor, a battery sensor, a fuel sensor, a tire sensor, a steering sensor based on the rotation of a steering wheel, a vehicle interior temperature sensor, and a vehicle interior humidity sensor.

As such, the sensor unit 760 may acquire sensing signals related to vehicle heading information, vehicle location information (GPS information), vehicle angle information, vehicle speed information, vehicle acceleration information, vehicle tilt information, vehicle forward/backward movement information, battery information, fuel information, tire information, vehicle lamp information, vehicle interior temperature information, and vehicle interior humidity information.

Meanwhile, the sensor unit 760 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The ECU 770 may control the overall operation of each unit inside the electronic control apparatus 700.

The ECU 770 may perform a specific operation in response to input from the input unit 710, may receive a sensing signal from the sensor unit 760 and transmit the signal to the vehicle display apparatus 100, may receive map information from the memory 740, and may control the operations of the drive units 751, 752, 753, 754, and 756.

In addition, the ECU 770 may receive weather information and road traffic state information such as, for example, Transport Protocol Expert Group (TPEG) information, from the communication unit 720.

The ECU 770 may overlap, while the vehicle is traveling, at least one of traveling guidance information and vehicle traveling information, with the vehicle front-view image 810 from the front camera 195d.

Meanwhile, the display 780 displays, while the vehicle is traveling, the vehicle front-view image 810, transmitted from the front camera 195d, in the first area corresponding to the driver's seat Std within the overall area of the display 180, and further displays at least one of traveling guidance information and vehicle traveling information so as to overlap the vehicle front-view image 810.

Meanwhile, the ECU 770 may generate an around-view image by combining a plurality of images received from the cameras 795. In particular, when a vehicle speed is a prescribed speed or lower or when the vehicle moves into reverse, the ECU 770 may generate an around-view image.

The display 780 may display the generated around-view image. In particular, various user interfaces may be provided, in addition to the around-view image.

The audio output unit 785 converts an electrical signal from the ECU 770 into an audio signal to output the audio signal. To this end, the audio output unit 785 may include a speaker, for example. The audio output unit 785 may output sound corresponding to the operation of the input unit 710, i.e. buttons.

The audio input unit 786 may receive user voice. To this end, the audio input unit 786 may include a microphone. The audio input unit 786 may convert the received voice into an electrical signal and transmit the electrical signal to the ECU 770.

The power supply unit 790 may supply electric power to the respective components under the control of the ECU 770. In particular, the power supply unit 790 may receive electric power from an in-vehicle battery, for example.

The cameras 795 may include the four cameras 195a, 195b, 195c and 195d illustrated in FIG. 2B and the indoor camera 195e. A plurality of images captured by the cameras 795 may be transmitted to the ECU 770 or a separate processor (not illustrated).

FIGs. 6A to 15C are views referenced to explain various operating methods of the vehicle display apparatus according to an embodiment of the present invention.

FIG. 6A illustrates that the display 180 of the vehicle display apparatus 100 is located on a dashboard 220 inside the vehicle.

The display 180 may be located in the area corresponding to the driver's seat Std and the passenger seat Stp. For example, the display 180 may have a horizontal length of approximately 1.2 m.

The display 180 may include any one of various display panels including, for example, a Liquid Crystal Display (LCD) panel and an Organic Light Emitting Diode (OLED) panel.

Meanwhile, the display 180 may display, for example, various pieces of information related to vehicle traveling and content.

In particular, the display 180 may display, while the vehicle is traveling, a vehicle front-view image, transmitted from a front camera, in the first area corresponding to the driver's seat Std within the overall area of the display 180, and further display at least one of traveling guidance information and vehicle traveling information so as to overlap the vehicle front-view image. In this way, as the display of the vehicle front-view image and the traveling-related information becomes possible, the increased convenience of use may be realized.

In particular, as the vehicle front-view image is displayed via the display 180, which is located in the area corresponding to the driver's seat Std and the passenger seat Stp, the seamless display of both the image and the visually perceivable view through the windshield WS may be realized.

Meanwhile, the display 180 may further display vehicle state information and/or an image of content, in addition to the vehicle front-view image, thereby providing various pieces of information.

Meanwhile, although the display 180 may be oriented perpendicular to the plane of the dashboard 220 inside the vehicle, various alterations are possible.

For example, the display 180 may be oriented to tilt toward the driver who sits on the driver's seat Std.

Meanwhile, the processor 170 may control the display 180 to adjust the angle of the display 180 based on the eye level of the driver who sits on the driver's seat Std, i.e. the driver's eyes. To this end, the processor 170 may further include an angle adjustment unit (not illustrated) to adjust the angle of the display 180. The angle adjustment unit (not illustrated) may be implemented into an actuator.

Meanwhile, the display 180 may be a curved display unit having at least one curvature. In particular, the first area of the display 180 corresponding to the driver's seat Std may have the smallest curvature. That is, both side areas of the display 180 may be bent by the greatest curvature and the central area of the display 180 may be bent by the smallest curvature.

Meanwhile, the curvilinear shape of the display 180 may vary to correspond to the shape of the dashboard 222 of the vehicle.

Meanwhile, unlike FIG. 6A, the display 180 may be located at the lower end of the windshield WS, rather than the dashboard 222. In particular, the display 180 may include a transparent display located at the lower end of the windshield WS.

Even when the transparent display is located at the lower end of the windshield WS, the display may display a vehicle front-view image from the front camera 195d and further display at least one of traveling guidance information and vehicle traveling information to overlap the vehicle front-view image.

In particular, the transparent display may further enhance the augmented reality function.

Hereinafter, for convenience of description, the display apparatus 100 will be described under the assumption that the display 180 is disposed on the dashboard 222.

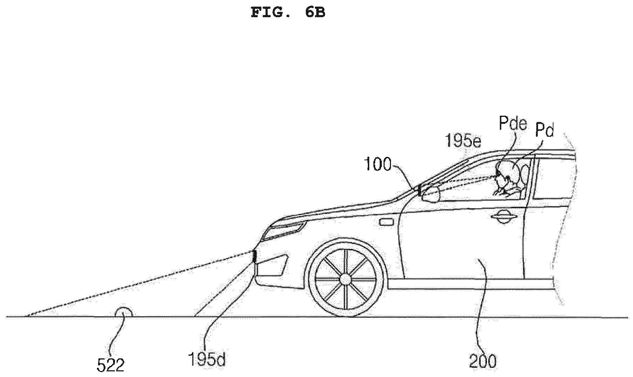

FIG. 6B is a side view of the vehicle illustrating the display apparatus including the display 180, the front camera 195d, and the indoor camera 195e.

Referring to FIG. 6B, the front camera 195d may be attached to one side of the front end of the vehicle and serve to capture an image of the view in front of the vehicle.

Meanwhile, the processor 170 may receive the image of the view in front of the vehicle from the front camera 195d, and perform signal-processing for the image to control the display of the image in the first area of the display 180, which is located on the dashboard at a position corresponding to the driver's seat Std and the passenger seat Stp.

The processor 170 may calculate the posture information of the driver Pd based on an image of the driver from the indoor camera 195e, and perform scaling on at least a part of the vehicle front-view image from the front camera 195d based on the posture information.

Specifically, the processor 170 may calculate, for example, the position of the eyes of the driver Pd and the distance to the display 180 based on the image of the driver from the indoor camera 195e, and vary scaling based on the calculated position of the eyes of the driver Pd and the distance to the display 180.

Meanwhile, for the seamless display of both the image and the visually perceivable front-view through the windshield WS, the processor 170 may control the image of the view in front of the vehicle, transmitted from the front camera 195d, such that the scaling rate of the upper region of the image is smaller than the scaling rate of the lower region of the image.

That is, scaling may be performed such that the upper region of the image of the view in front of the vehicle, transmitted from the front camera 195d, becomes smaller. For example, the processor 170 may perform signal-processing to acquire a trapezoidal image in which the upper region has a smaller length.

For example, the processor 170 may control scaling such that the scaling rate of the upper region of the vehicle front-view image becomes smaller than the scaling rate of the lower region with increasing distance from the driver Pd to the display 180.

The processor 170 may control the display 180 to display the scaled image of the view in front of the vehicle in the first area of the display 180.

Meanwhile, when an obstacle 522 on the road (e.g., a pothole, a safety bump, or impurities) is present in the image of the view in front of the vehicle, the processor 170 may check an object via, for example, object verification, and control the display 180 to display the object verification information so as to overlap the image of the view in front of the vehicle displayed on the display 180.

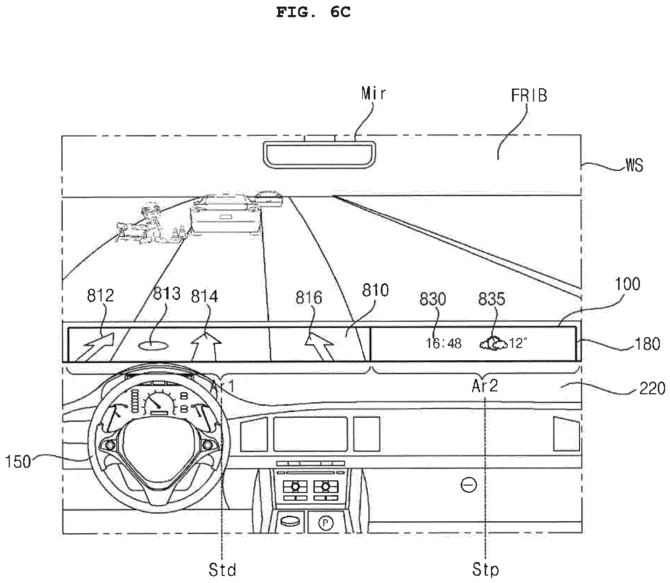

FIG. 6C illustrates the display of the image of the view in front of the vehicle, transmitted from the front camera 195d, on the display 180.

As exemplarily illustrated in FIG. 6C, the vehicle front-view image 810 is displayed in the first area Ar1 corresponding to the driver's seat Std within the overall area of the display 180.

The vehicle front-view image 810 may include a road area and a lane area.

Meanwhile, the processor 170 may control the display of, for example, at least one of additional information such as, for example, vehicle-related information and content information, in addition to the vehicle front-view image 810, on the display 180, which is located in the area corresponding to the driver's seat Std and the passenger seat Stp.

The vehicle-related information may include, for example, current time information, weather information, vehicle indoor temperature information, blowing air intensity information, humidity information, vehicle outdoor/indoor information, vehicle traveling distance information, current vehicle speed information, engine RPM information, vehicle fuel amount information, vehicle window opening/closing information, vehicle door opening/closing information, vehicle indoor light flashing information, and vehicle sunroof opening/closing information.

Meanwhile, the content information may include, for example, information regarding radio channels received to and output from the vehicle, vehicle audio volume magnitude information, content playback time, and title information.

In addition, the content information may further include, for example, external input source information and external input terminal information.

FIG. 6C illustrates that additional information including current time information 830 and weather information 835 is displayed in a second area Ar2 corresponding to the driver's seat Std within the overall area of the display 180.

The processor 170 may control the display of, for example, various pieces of information and images on the longitudinally elongated display 180. As illustrated in FIG. 6C, the processor 170 may control the simultaneous display of the vehicle front-view image 810 and the additional information, for example.

Meanwhile, the processor 170 may control the display of at least one of traveling guidance information and vehicle traveling information to overlap the vehicle front-view image 810.

FIG. 6C illustrates that traveling guide indicators 812, 814 and 816, which represent travel direction guide for each lane, are displayed to overlap the vehicle front-view image 810 including the road and the lanes while the vehicle is traveling. In this way, the driver can intuitively recognize the direction of travel for each lane by simply keeping his/her eyes forward. This may realize safety while the vehicle is traveling and increase the convenience of use.

Meanwhile, the vehicle front-view image 810 illustrated in FIG. 6C may show an area that the driver cannot view.

For example, the processor 170 may recognize the eye level of the driver via the indoor camera 195e, and control the vehicle front-view image 810 such that the vehicle front-view image 810 shows an area that cannot be visually checked by the driver, in consideration of the driver's eye level.

Meanwhile, the processor 170 may control the display of obstacle information 813 in the vehicle front-view image 810 as illustrated in FIG. 6C when the obstacle (522 of FIG. 6B) is present in the invisible area.

Meanwhile, the processor 170 may recognize the eye level of the driver via the indoor camera 195a and adjust the image capture angle of the front camera 195d in consideration of the driver's eye level. Alternatively, the processor 170 may control the image captured by the front camera 195d such that part of the image is extracted and displayed.

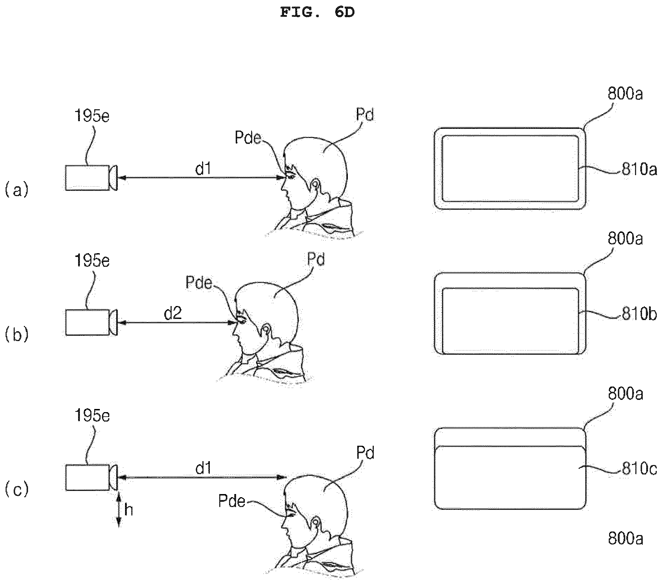

FIG. 6D illustrates that the available region of the vehicle front-view image captured by the front camera 195d varies according to the position of the eyes of the vehicle driver.

In FIG. 6D, (a) illustrates that the distance between the front camera 195d and the eye PDe of the driver Pd is d1. Meanwhile, the processor 170 may extract a region 810a of an image 800a received from the front camera 195d and control the display of the extracted region 810a on the display 180.

In FIG. 6D, (b) illustrates that the distance between the front camera 195d and the eye PDe of the driver Pd is d1 which is shorter than d1. Meanwhile, the processor 170 may extract a region 810b of the image 800a received from the front camera 195d and control the display of the extracted region 810b on the display 180. As compared to (a) in FIG. 6D, the extracted region 810b may move downward.

In FIG. 6D, (c) illustrates that the distance between the front camera 195d and the eye PDe of the driver Pd is d1 and the height difference between the front camera 195d and the eye PDe of the driver Pd is h1. Meanwhile, the processor 170 may extract a region 810c of the image 800a received from the front camera 195d and control the display of the extracted region 810c on the display 180. As compared to (a) in FIG. 6D, the extracted region 810b may move downward and have a greater width.

As described above, seamless recognition with respect to the front view is possible by extracting part of the image captured by the front camera 195d in consideration of the driver's eye level.

Meanwhile, unlike FIG. 6D, the image capture angle of the front camera 195d may be adjusted in consideration of the driver's eye level.

For example, the processor 170 may control the front camera 195d such that the image capture angle is further lowered, i.e. oriented toward the ground in the case of (b) of FIG. 6D compared to (a) in FIG. 6D.

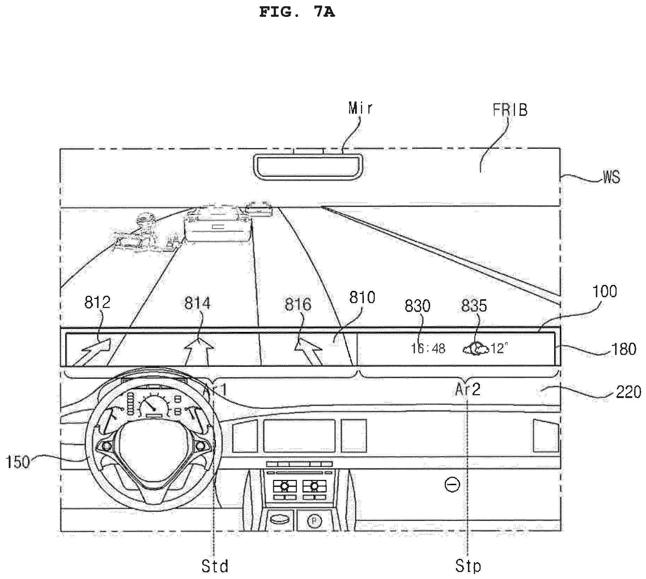

FIG. 7A illustrates one exemplary user interface displayed on the display 180.

As illustrated in FIG. 7A, the processor 170 may control the display of the vehicle front-view image 810 in the first area Ar1 corresponding to the driver's seat Std within the overall area of the display 180 and, in particular, control the display of vehicle heading direction guide information, i.e. the vehicle heading direction indicators 812, 814 and 816 to overlap the vehicle front-view image 810.

At this time, the vehicle heading direction indicators 812, 814 and 816 may be displayed only with regard to the lane in which the vehicle is traveling, unlike FIG. 7A.

Meanwhile, as illustrated in FIG. 7A, the processor 170 may control the display of additional information 830 and 835 in the second area Ar2 corresponding to the passenger seat Stp with the overall area of the display 180.

FIG. 7A illustrates that the additional information 830 and 835 includes current time information 830 and weather information, more particularly, current temperature information 835.

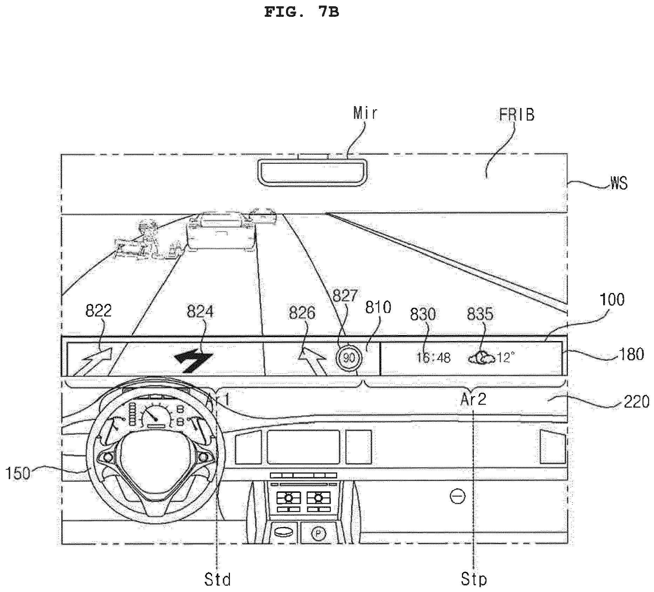

FIG. 7B illustrates another exemplary user interface displayed on the display 180.

As illustrated in FIG. 7B, the processor 170 may control the display of the vehicle front-view image 810 in the first area Ar1 corresponding to the driver's seat Std within the overall area of the display 180 and, in particular, control the display of vehicle heading direction guide information, i.e. vehicle heading direction indicators 822, 824 and 826 to overlap the vehicle front-view image 810.

In particular, the processor 170 may control the vehicle heading direction indicator 824 with regard to the current traveling lane so as to be highlighted for differentiation from the other vehicle heading direction indicators. FIG. 7B illustrates the vehicle heading direction indicator 824 which represents movement to the left lane.

Meanwhile, as illustrated in FIG. 7B, the processor 170 may control the display of vehicle traveling information over the vehicle front-view image 810.

The vehicle traveling information may include, for example, vehicle speed information, vehicle traveling distance information, information regarding distance to a destination, traveling time information from the starting point, traveling distance information from the starting point, and road speed limit information.

FIG. 7B illustrates that a speed limit indicator 827 of the current traveling road is displayed over the vehicle front-view image 810. Through the display of the speed limit indicator 827, the driver can intuitively recognize speed limit information while keeping his/her eyes forward.

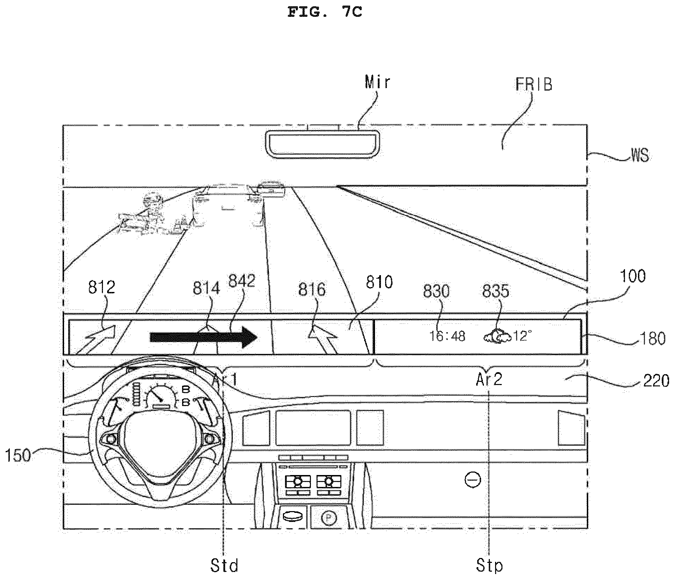

FIG. 7C illustrates still another exemplary user interface displayed on the display 180.

FIG. 7C illustrates that guide information 842, which indicates rightward movement from the current traveling lane, is displayed to overlap the vehicle front-view image 810.

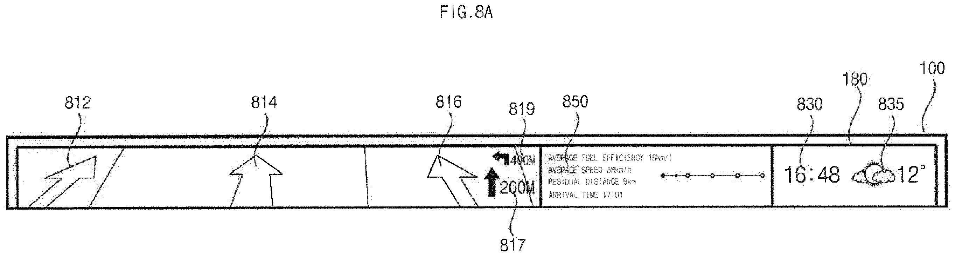

FIGs. 8A to 8D illustrate various exemplary user interfaces displayed on the display 180.

As exemplarily illustrated in FIG. 8A, the processor 170 may control the display of traveling guidance information, including the vehicle heading direction indicators 812, 814 and 816, traveling distance indicators 817 and 819, vehicle traveling information 850, current time information 830, and weather information 835, on the display 180.

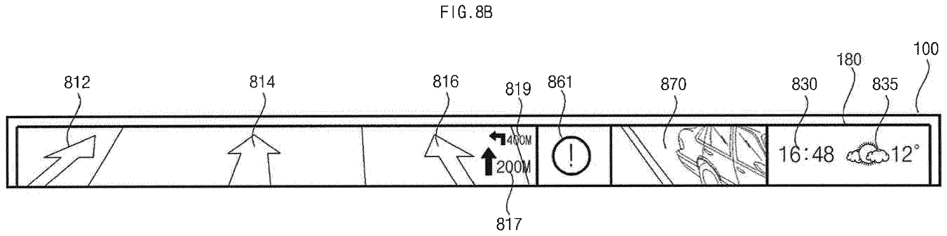

Alternatively, as exemplarily illustrated in FIG. 8B, the processor 170 may control the display of traveling guidance information, including the vehicle heading direction indicators 812, 814 and 816, traveling distance indicators 817 and 819, lane change caution information 861, a side-view image 870, current time information 830, and weather information 835, on the display 180.

As such, the driver can recognize blind spot areas, which cannot be checked via side-view mirrors, from the side-view image 870.

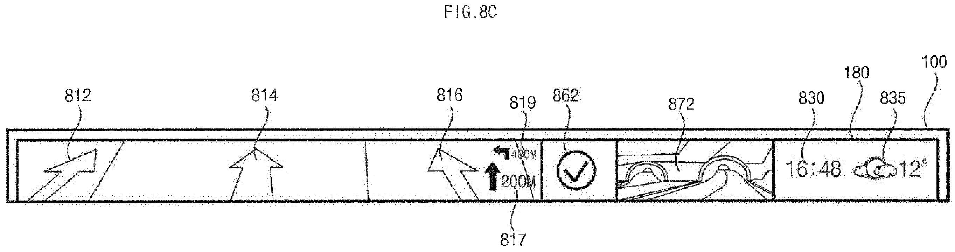

Alternatively, as exemplarily illustrated in FIG. 8C, the processor 170 may control the display of traveling guidance information, including the vehicle heading direction indicators 812, 814 and 816, traveling distance indicators 817 and 819, lane change caution information 862, a rear-view image 872, current time information 830, and weather information 835, on the display 180.

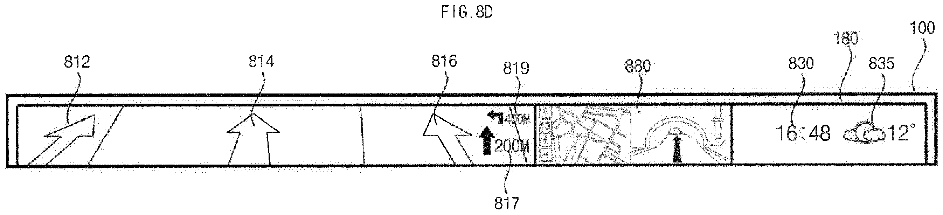

Alternatively, as exemplarily illustrated in FIG. 8D, the processor 170 may control the display of traveling guidance information, including the vehicle heading direction indicators 812, 814 and 816, traveling distance indicators 817 and 819, a navigation map image 880, current time information 830, and weather information 835, on the display 180.

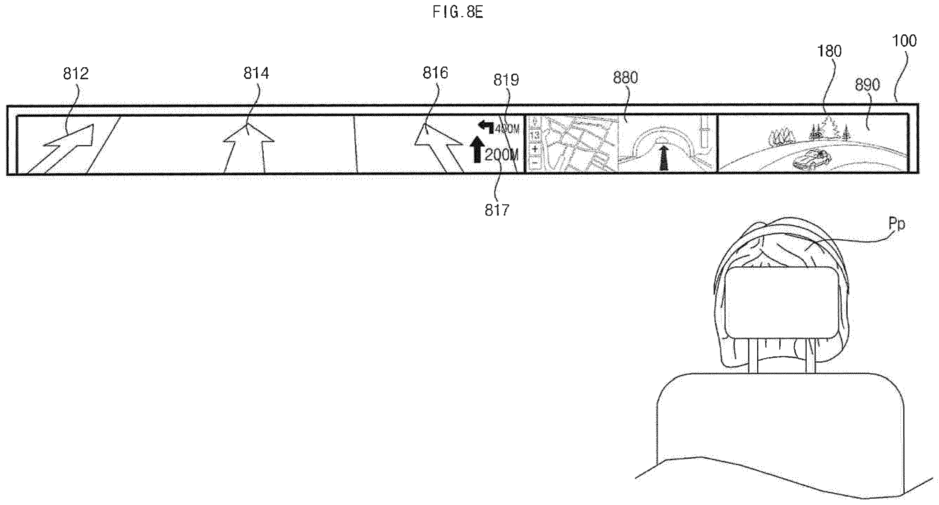

Alternatively, as exemplarily illustrated in FIG. 8E, the processor 170 may control the display of traveling guidance information, including the vehicle heading direction indicators 812, 814 and 816, traveling distance indicators 817 and 819, a navigation map image 880, and an image of playback content 890, on the display 180.

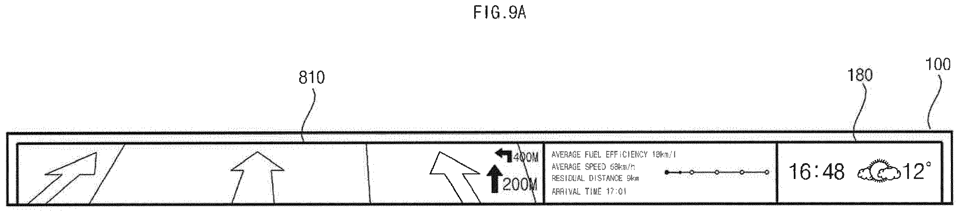

FIGs. 9A to 9C illustrate one exemplary method for movement of various pieces of information or images displayed on the display 180.

First, FIG. 9A illustrates that, for example, the vehicle front-view image 810, vehicle traveling information, and additional information are displayed on the display 180.

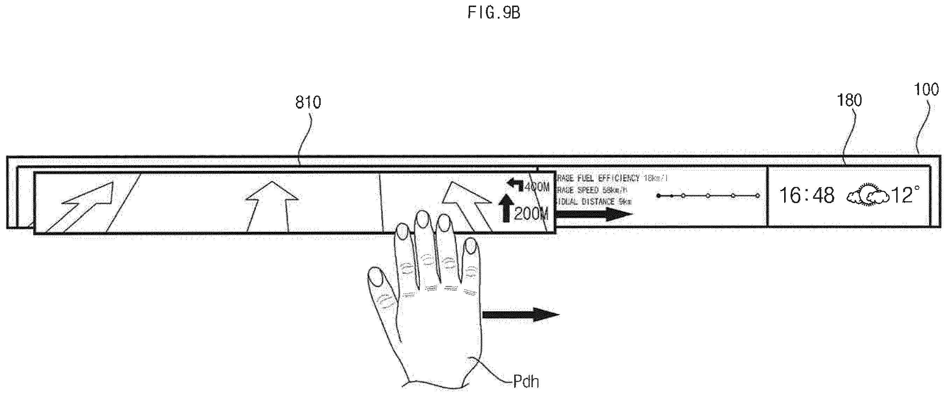

In the state in which the vehicle front-view image 810, vehicle traveling information, and additional information are displayed on the display 180, as exemplarily illustrated in FIG. 9B, the processor 170 may recognize the occurrence of a gesture by the driver's right hand Pdh.

For example, an image of the interior of the vehicle, captured by the indoor camera 195e, may be transmitted to the gesture recognition unit 112, and the gesture recognition unit 112 may recognize a gesture by the driver's right hand. For example, the gesture recognition unit 112 may recognize a gesture to move the vehicle front-view image rightward.

In another example, when the display apparatus 100 includes a proximity touch sensing unit (not illustrated) disposed on the display 180, the proximity touch sensing unit (not illustrated) may recognize a gesture by the driver's right hand.

At this time, the gesture recognition unit 112 may include the proximity touch sensing unit (not illustrated).

In a further example, when the display apparatus 100 includes a light transmitting element (not illustrated) and a light receiving element (not illustrated) arranged near the display 180, the display apparatus 100 may recognize a gesture by the driver's right hand based on an optical signal received by the light receiving unit (not illustrated).

At this time, the gesture recognition unit 112 may include the light receiving element (not illustrated) and the light transmitting element (not illustrated).

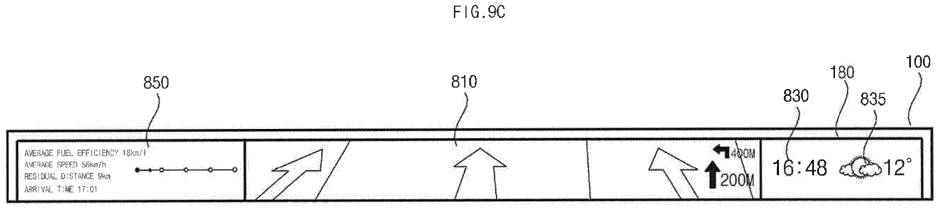

When the processor 170 recognizes the gesture by the driver's right hand Pdh in the state in which the vehicle front-view image 810, vehicle traveling information, and additional information are displayed on the display 180, the processor 170 may control the vehicle front-view image 810 to be moved rightward and displayed as illustrated in FIGs. 9B and 9C.

More specifically, as exemplarily illustrated in FIG. 9B, the processor 170 may control the vehicle front-view image 810 to float upon recognition of a gesture by the driver's right hand Pdh. After recognizing the gesture by the driver's right hand Pdh, as exemplarily illustrated in FIG. 9C, the processor 170 may control the vehicle front-view image 810 to be moved rightward and displayed.

FIG. 9C illustrates that vehicle traveling information 850 is displayed in a display area corresponding to the driver's seat Std.

Meanwhile, movement input may be, for example, voice recognition based input, in addition to gesture input and button input.

As described above, in the state in which the vehicle front-view image 810, the vehicle-related information, and the image of content are displayed on the display 180, the processor 170 may change the arrangement sequence and/or size of these items displayed on the display 180 upon receiving input to move at least one of the vehicle front-view image 810, the vehicle-related information, and the image of content.

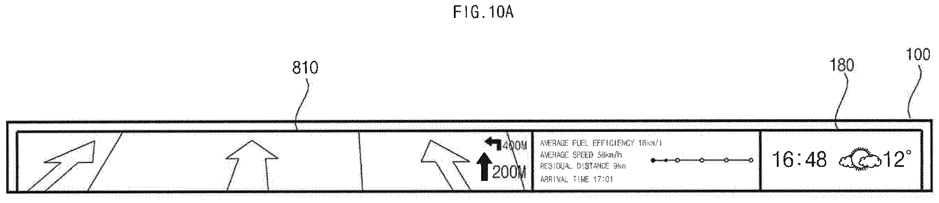

FIGs. 10A to 10E illustrate another exemplary method for movement of various pieces of information or images displayed on the display 180.

In the same manner as FIG. 9A, FIG. 10A illustrates that, for example, the vehicle front-view image 810, vehicle traveling information, and additional information are displayed on the display 180.

Meanwhile, the vehicle display apparatus 100 may receive an input signal from the input apparatus 300, mounted in the steering wheel 150, via the interface unit 130.

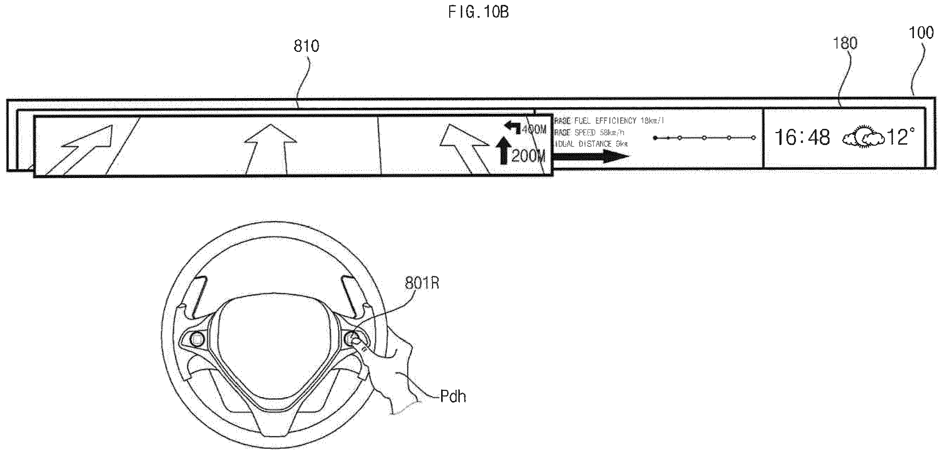

As exemplarily illustrated in FIG. 10B, when a right button 801R of the input apparatus 300 is pushed, the vehicle display apparatus 100 may receive a rightward movement signal from the input apparatus 300.

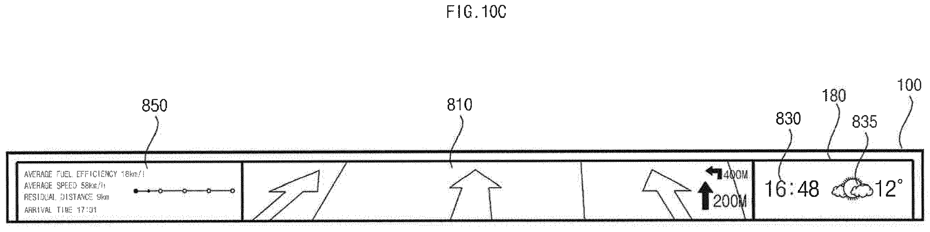

As such, as exemplarily illustrated in FIG. 10C, the processor 170 may control the vehicle front-view image 810 to be moved rightward and displayed.

Meanwhile, the processor 170 may control the display of a prescribed image in the second area Ar2 corresponding to the passenger seat Stp within the overall area of the display 180 when a passenger Pp is present in the passenger seat Stp.

For example, the processor 170 may control the display of an image of content, transmitted from a mobile terminal of the passenger Pp, in the second area Ar2.

In another example, the processor 170 may control the display of a broadcast image in the second area Ar2 corresponding to the passenger seat Stp by signal processing a broadcast signal received by the vehicle.

In a further example, when the processor 170 receives advertisement information from shops near the road while the vehicle is traveling, the processor 170 may control the display of the advertisement information in the second area Ar2 corresponding to the passenger seat Stp.

In particular, the processor 170 may control the display of specific advertisement information, which receives attention of the passenger, in the second area Ar2 corresponding to the passenger seat Stp.

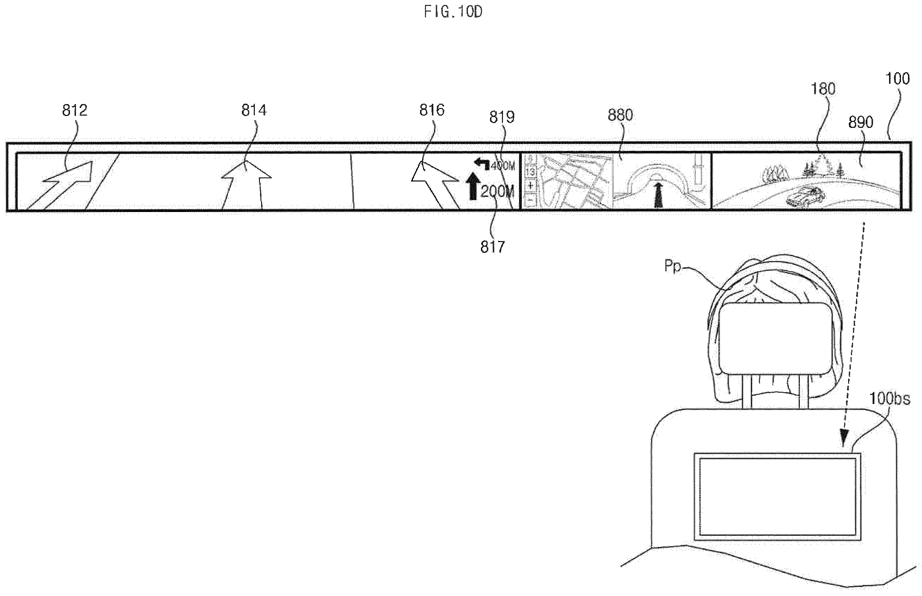

Meanwhile, as exemplarily illustrated in FIG. 10D, the processor 170 may control the display of the mage of prescribed content 890 in the second area Ar2 corresponding to the passenger seat Stp.

At this time, upon receiving external transmission input for the image of prescribed content 890, the processor 170 may control the transmission of the image of prescribed content 890 to an adjacent terminal or a separate display apparatus via the interface unit 130 or the communication unit 120.

For example, in the state in which the vehicle front-view image 810, the vehicle-related information, and the image of content are displayed on the display 180, the processor 170 may control the transmission of at least one data of the vehicle front-view image 810, the vehicle-related information, and the image of content to another display 180 upon receiving an input to move and display at least one of the vehicle front-view image 810, the vehicle-related information, and the image of content.

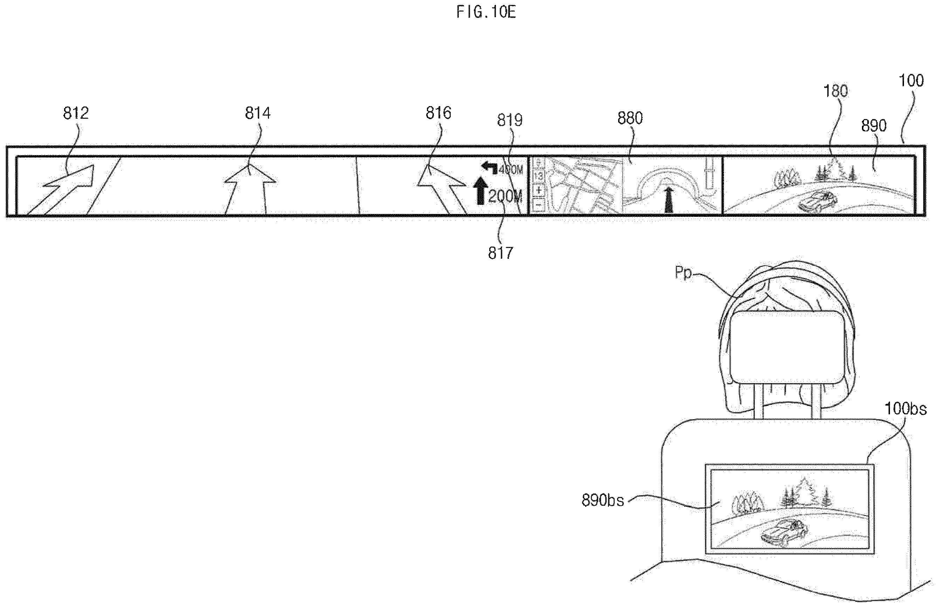

FIG. 10E illustrates that content data is transmitted to a separate display apparatus 100bs installed at the back of the passenger seat Stp such that an image of content 100bs is displayed on the display apparatus 100bs. As such, a passenger behind the passenger seat Stp as well as the passenger in the passenger seat Stp may watch the same content.

At this time, the audio output unit 185 or 785 inside the vehicle 200 may output sound corresponding to the images of content 890 and 890bs.

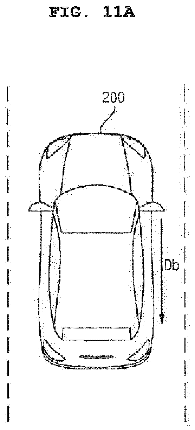

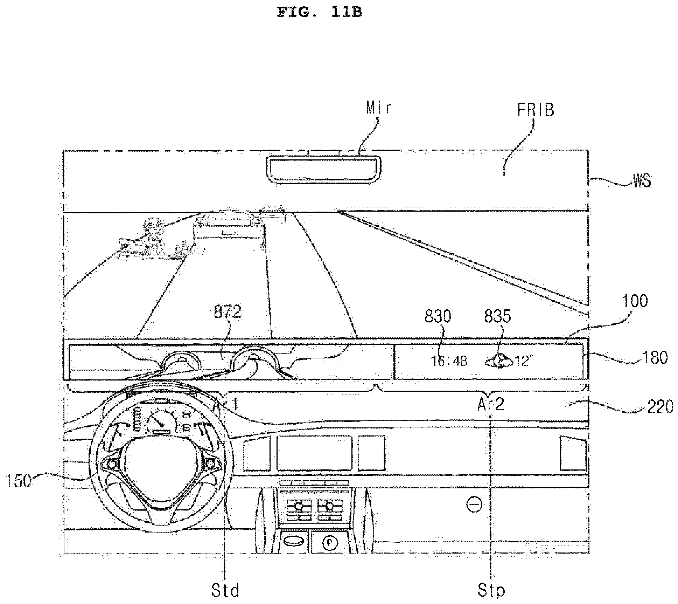

Meanwhile, FIG. 11A illustrates that the vehicle goes in reverse.

While the vehicle is moving in reverse, the processor 170 may control the display of the rear-view image 872 captured by the rear camera 195b in the first area corresponding to the driver's seat Std within the overall area of the display 180.

Alternatively, while the vehicle is moving in reverse or while the vehicle is traveling at a prescribed speed or lower, the processor 170 performs control to initiate an around-view mode. As the around-view mode begins, the processor 170 may control the generation of an around-view image 210 using a plurality of images acquired from the front camera 195d, the left camera 195a, the right camera 915c and the rear camera 195b, and control the display of the around-view image 210 on the display 180.

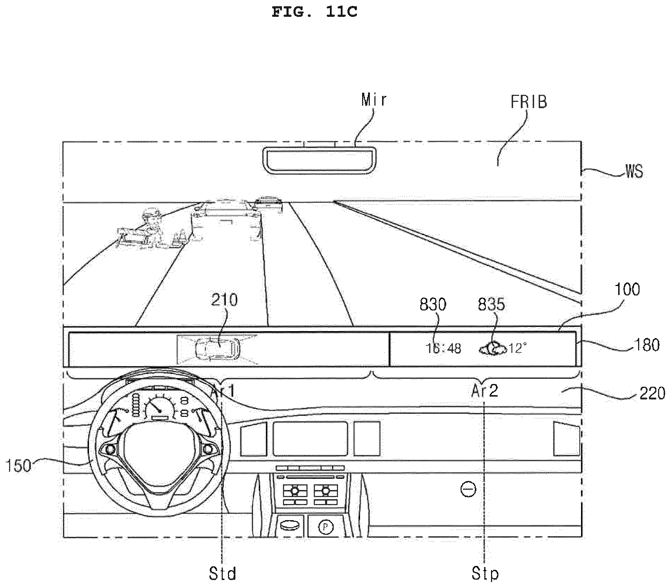

In particular, as exemplarily illustrated in FIG. 11C, the processor 170 may perform control to display the around-view image 210 in the first area Ar1 of the display 180 corresponding to the driver's seat Std.

Although FIG. 11C illustrates that the around-view image 210 is rotated to the left by 90 degrees and displayed, in an alternative, the around-view image may be displayed to conform to the heading direction of the vehicle.

Meanwhile, the processor 170 may control the display of at least one of the vehicle front-view image 810 from the front camera 195d and a plurality of images acquired from the left camera 195a, the right camera 195c, and the rear camera 195b on the display 180.

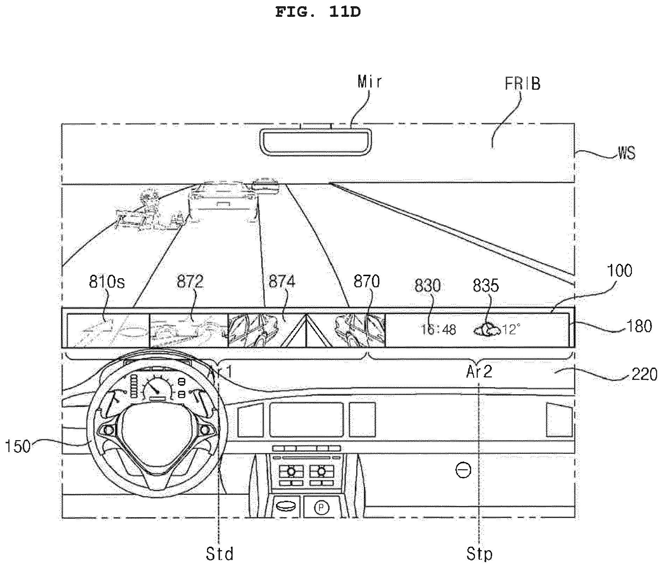

For example, while the vehicle is moving in reverse, while the vehicle is traveling at a prescribed speed or lower, or when a side lamp is operated to change the lane, as exemplarily illustrated in FIG. 11D, the processor 170 may control the display of all of a vehicle front-view image 810s, rear-view image 872, left-view image 874, and right-view image 870 in the first area Ar1.

Meanwhile, the processor 170 may control the display of indicators which represent forward, rearward, leftward and rightward for discrimination of respective images.

Meanwhile, in the state in which the vehicle front-view image 810, the vehicle-related information, and the image of content are displayed on the display 180, the processor 170 may change the arrangement sequence and/or size of these items displayed on the display 180 upon receiving input to move at least one of the vehicle front-view image 810, the vehicle-related information, and the image of content.

Meanwhile, in the state in which the vehicle front-view image 810, rear-view image 872, left-view image 874 and right-view image 870 are displayed on the display 180, the processor 170 may control expansion or movement of a specific image in response to an expansion input or a movement input.

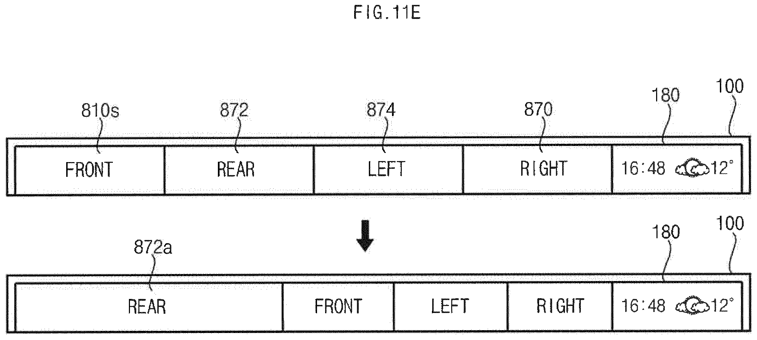

FIG. 11E illustrates that the rear-view image 872 is moved to and displayed at the leftmost area of the display 180 in response of a movement input.

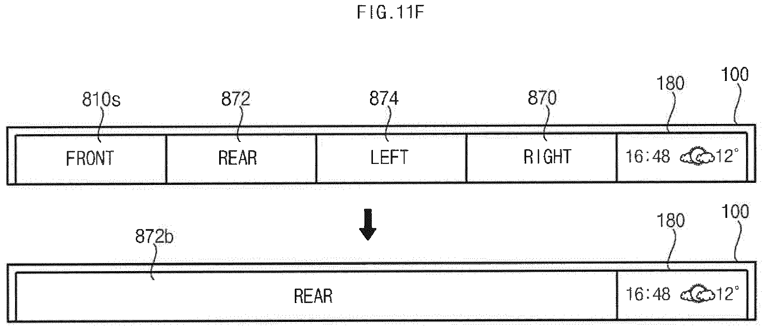

FIG. 11F illustrates that an expanded rear-view image 872b is moved to and displayed in the first area of the display 180 in response of an input to select the rear-view image 872.

Meanwhile, the processor 170 may control the display of emergency warning information on the display 180 in top priority in the state in which an emergency warning is required while the vehicle is traveling.

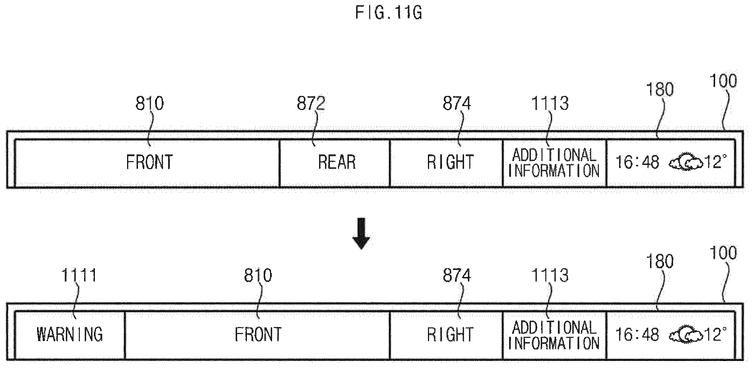

FIG. 11G illustrates that, upon the occurrence of an emergency warning state, an emergency warning message 111 is displayed at the leftmost position in the first area of the display 180 and other images are moved and displayed, or partially omitted.

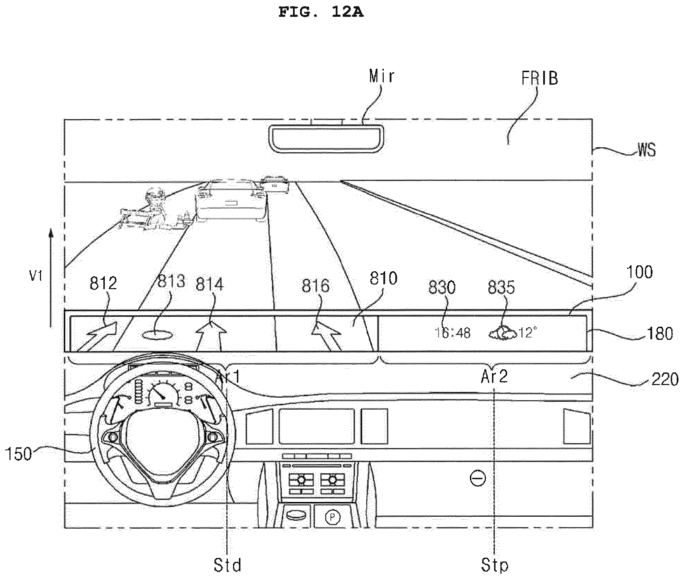

In the same manner as FIG. 6C, FIG. 12A illustrates that, while the vehicle is traveling, the traveling guide indicators 812, 814 and 816, which guides the direction of travel with respect to each lane, are displayed to overlap the vehicle front-view image 810 including a road and lanes. As such, the driver can intuitively recognize the direction of travel with respect to each lane by simply keeping his/her eyes forward. This may realize safety while the vehicle is traveling and increase the convenience of use.

Meanwhile, the processor 170 may perform control to increase or reduce the size of the vehicle front-view image 810 as the vehicle traveling speed increases, or may perform control to highlight traveling guidance information and vehicle traveling information.

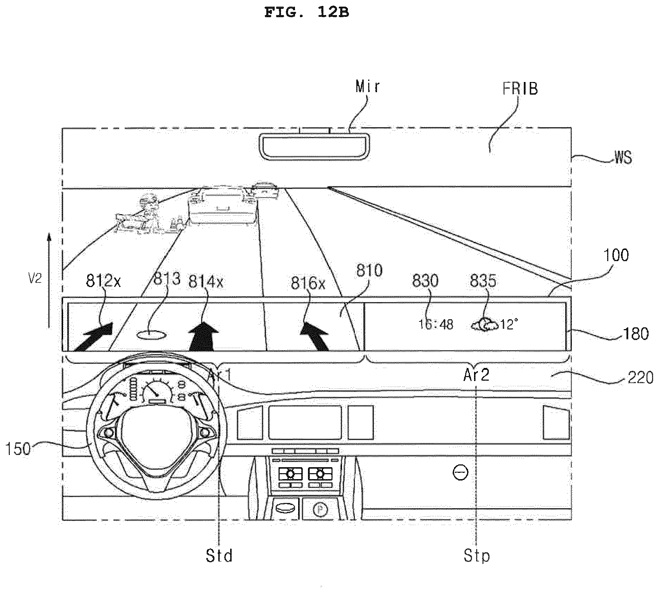

FIG. 12B illustrates the case where the vehicle is traveling at a speed V2 which is faster than a speed V1 of the vehicle in FIG. 12A. As such, the processor 170 may control traveling guidance information, i.e. traveling guide indicators 812x, 814x and 816x to be highlighted, and control the display of the highlighted traveling guide indicators 812x, 814x and 816x.

Examples of highlighting may be exemplified by size variation, color variation, brightness variation, and shape variation.

FIG. 12B illustrates color variation for the improvement of visibility of traveling guide indicators 812x, 814x and 816x.

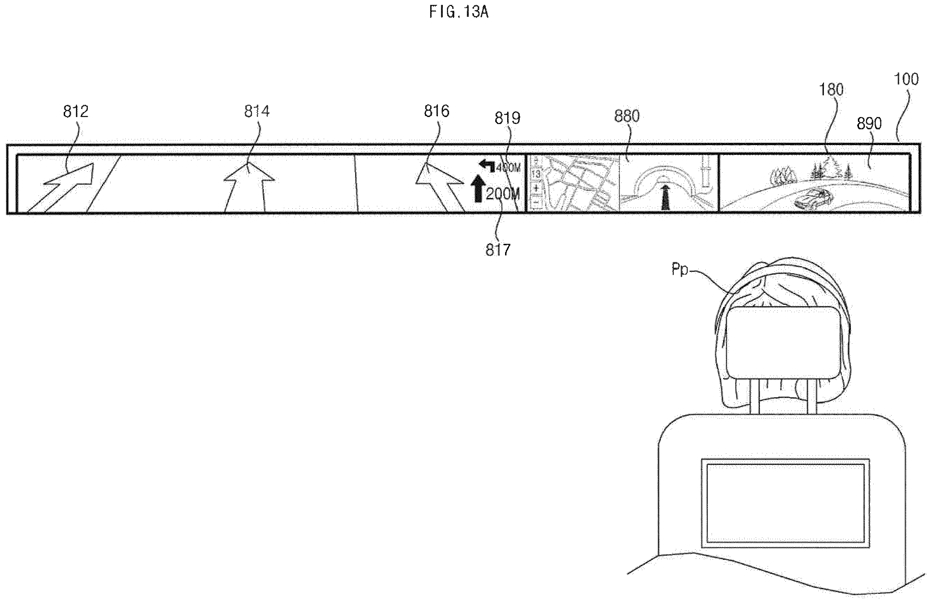

Meanwhile, FIG. 13A illustrates that the image of prescribed content 890 is displayed in the second area Ar2 corresponding to the passenger seat Stp.

The processor 170 may recognize that no passenger is present in the passenger seat Stp or that a passenger is sleeping in the passenger seat Stp from an image of the interior of the vehicle captured by the indoor camera 195e.

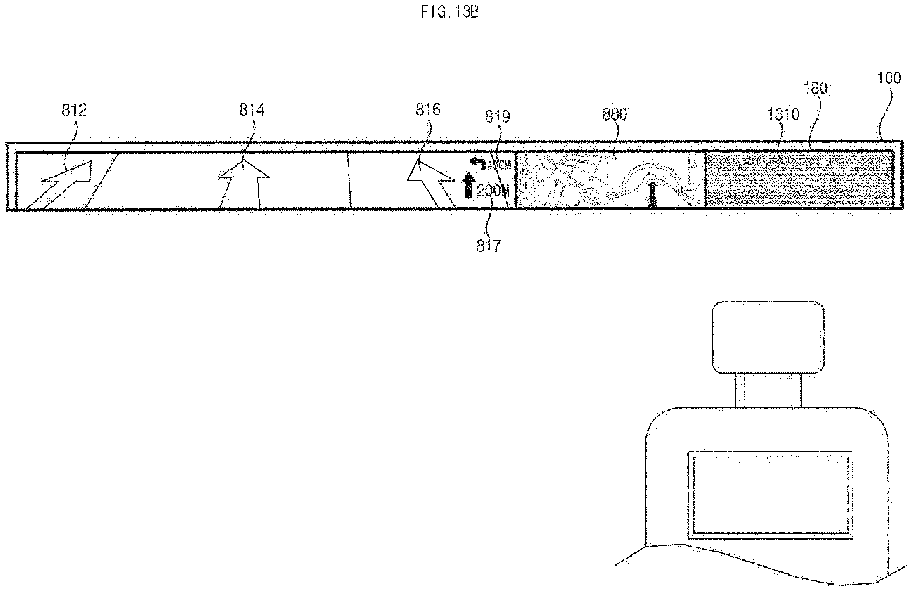

When no passenger is present in the passenger seat Stp or when a passenger is sleeping in the passenger seat Stp, the processor 170 may control turn-off of at least a part of the second area Ar2 corresponding to the passenger seat Stp within the overall area of the display 180 as exemplarily illustrated in FIG. 13B.

FIG. 13B illustrates that the turned-off area 1310 of the second area Ar2 is shadowed. This may reduce unnecessary consumption power.

Meanwhile, the display apparatus 100 may exchange data with, for example, the external server 500 or the external terminal via the communication unit 120.

For example, the display apparatus 100 may receive advertisement information from a server or a transmitter of a shop near the road via the communication unit 120 while the vehicle is traveling.

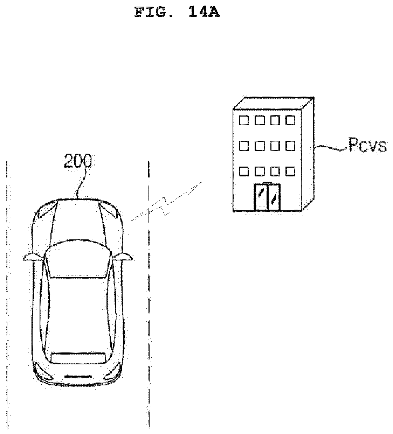

FIG. 14A illustrates the reception of advertisement information from a transmitter (not illustrated) of a convenience store Pcvs while the vehicle 200 is traveling.

The processor 170 may control the display of an image corresponding to advertisement information in an area of the display 180 upon receiving location-based advertisement information from an external source while the vehicle 200 is traveling.

For example, the processor 170 may control the display of an image corresponding to advertisement information in the first area corresponding to the driver's seat Std when no passenger is present in the passenger seat Stp.

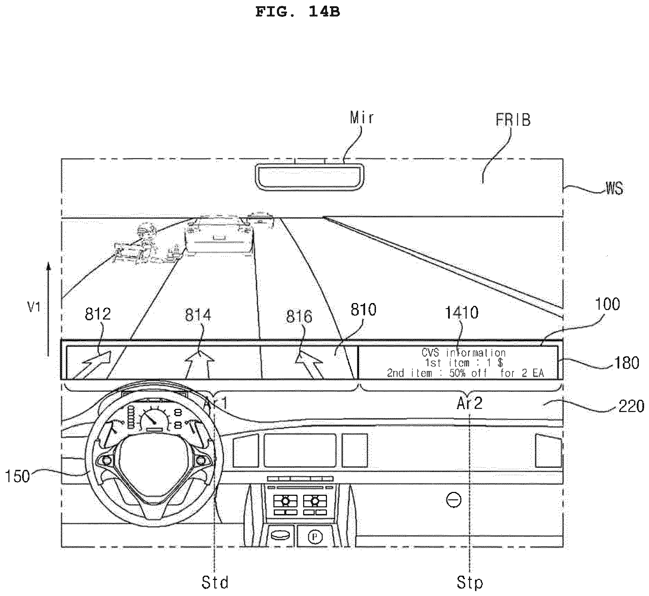

Alternatively, the processor 170 may control the display of an image 1410 corresponding to advertisement information in the second area corresponding to the passenger seat Stp when the passenger is present in the passenger seat Stp as illustrated in FIG. 14B.

In particular, the processor 170 may perform control to display only advertisement information, corresponding, for example, the passenger's tendency and hobby, on the display 180.

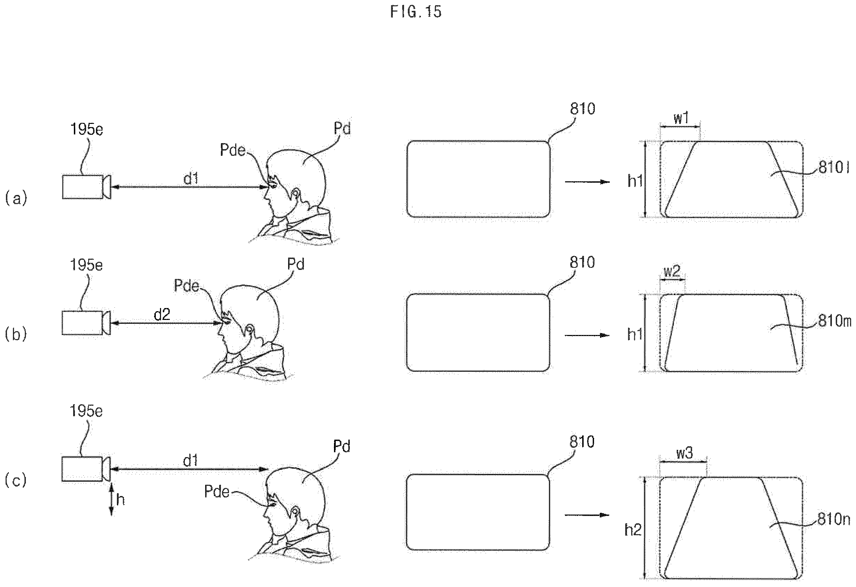

FIG. 15 illustrates the variation of scaling with respect to the vehicle front-view image captured by the front camera 195d according to the position of the eyes of the vehicle driver.

The processor 170 may calculate posture information of the driver based on a driver image from the indoor camera 195e and perform scaling with respect to at least a part of the vehicle front-view image 810 from the front camera 195d based on the posture information.

More specifically, the processor 170 may control the vehicle front-view image 810 such that the scaling rate of the upper region of the image 810 is smaller than the scaling rate of the lower region of the image 810 as the distance between the driver and the display 180 increases.

In FIG. 15, (a) illustrates that the distance between the front camera 195d and the eyes Pde of the driver Pd is d1.

Meanwhile, the processor 170 may control the image 810 received from the front camera 195d such that the scaling rate of the upper region of the image 810 is smaller than the scaling rate of the lower region of the image 810.

In FIG. 15, (b) illustrates that the distance between the front camera 195d and the eyes Pde of the driver Pd is d2 which is shorter than the distance d1.

Meanwhile, in the same manner as (b) in FIG. 15, the processor 170 may control the vehicle front-view image 810 received from the front camera 195d such that the scaling rate of the upper region of the image 810 is smaller than the scaling rate of the lower region of the image 810 as the distance between the display 180 and the eyes Pde of the driver Pd increases.

That is, as compared to the case of (a) in FIG. 15, the scaling rate of the upper region may become smaller in the case of (b) in FIG. 15.

In FIG. 15, (c) illustrates that the distance between the front camera 195d and the eyes Pde of the driver Pd is d1 and the height difference between the front camera 195d and the eyes Pde of the driver Pd is h1.

Meanwhile, as exemplarily illustrated in (c) of FIG. 15, the processor 170 may perform control to increase the upscaling rate of the vehicle front-view image 810 received from the front camera 195d as the height difference h1 between the front camera 195d and the eyes Pde of the driver Pd increases. In particular, as illustrated in (c) of FIG. 15, the processor 170 may perform control to increase the upscaling rate in the vertical direction.

In this way, it is possible to provide a vehicle front-view image, to which an augmented reality function is added, based on the position of the driver.

As is apparent from the above description, a vehicle display apparatus according to the embodiments of the present invention includes a front camera configured to capture a vehicle front-view image, a display disposed on a windshield or a dashboard inside a vehicle at a position corresponding to a driver's seat and a passenger seat, and a processor configured to control display of the vehicle front-view image transmitted from the front camera in a first area corresponding to the driver's seat within the overall area of the display while the vehicle is traveling, and to display at least one of traveling guidance information and vehicle traveling information so as to overlap the vehicle front-view image. The vehicle display apparatus is capable of displaying the vehicle front-view image and traveling-related information, thereby increasing the convenience of use.

In particular, as a result of displaying the vehicle front-view image via the display disposed in the area corresponding to the driver's seat and the passenger seat, the seamless display of both the image and the visually perceivable view through the windshield is possible.

Meanwhile, various pieces of information may be provided as at least one of vehicle state information and an image of content is further displayed, in addition to the vehicle front-view image, via the display disposed in the area corresponding to the driver's seat and the passenger seat.

Meanwhile, an enhanced augmented reality function may be realized by controlling the display of the vehicle front-view image in consideration of the driver's eye level recognized via an indoor camera.

Meanwhile, by displaying an image, captured by a rear camera while the vehicle is moving in reverse, in the first area corresponding to the driver's seat within the overall area of the display, the convenience of use for the driver may be increased.

Meanwhile, by displaying an image of content, played back by a media, in a second area corresponding to the passenger seat within the overall area of the display, the convenience of use for a passenger driver may be increased.

Meanwhile, it is possible to change, for example, the arrangement sequence and/or size of images and various pieces of information to be displayed on the display using various input methods, or to transmit the images and various pieces of information to another display inside the vehicle, which may increase the convenience of use.

Meanwhile, the convenience of use for the driver or the passenger may be increased via the reception and display of location-based advertisement information from, for example, shops near the road while the vehicle is traveling.

Meanwhile, the operating method of the vehicle display apparatus according to the present invention may be implemented as code that can be written on a processor-readable recording medium and thus read by a processor provided in the vehicle display apparatus or the vehicle. The processor-readable recording medium may be any type of recording device in which data is stored in a processor-readable manner. Examples of the processor readable recording medium may include a ROM, a RAM, a CD-ROM, a magnetic tape, a floppy disc, and an optical data storage device. In addition, the processor readable recording medium includes a carrier wave (e.g., data transmission over the Internet). Also, the processor readable recording medium may be distributed over a plurality of computer systems connected to a network so that processor readable code is written thereto and executed therefrom in a decentralized manner.

Although the preferred embodiments of the present invention have been disclosed for illustrative purposes, those skilled in the art will appreciate that various modifications, additions and substitutions are possible without departing from the scope of the invention as disclosed in the accompanying claims.

## Claims

1. A vehicle display apparatus (100) comprising:
a front camera (195d) configured to capture a forward view image (810) in front of a vehicle;
a display (180) including a first area (Ar1) oriented toward a driver seat (Std) and a second area (Ar2) oriented toward a passenger seat (Stp); and
a processor (170) configured to provide, to the first area (Ar1) of the display (180), (i) the forward view image (810) captured by the front camera (195d) and (ii) traveling guidance information or vehicle traveling information that is overlaid over the forward view image (810),
wherein the processor (170) is configured to reduce the size of the forward view image (810) as the vehicle traveling speed increases,
wherein the processor (170) is configured to provide a visual content (890) received from a mobile terminal of a passenger to the second area (Ar2) of the display (180) when the passenger is present on the passenger seat (Stp),
wherein the display (180) is a curved display unit having at least one curvature, and
wherein the first area (Ar1) of the display (180) corresponding to the driver's seat (Std) has the smallest curvature, and both side areas of the display (180) are bent by the greatest curvature.

2. The vehicle display apparatus (100) according to claim 1, further comprising an indoor camera (195e) configured to capture an image of a driver,
wherein the processor (170) is configured to determine an eye level of the driver from the captured image of the driver, and
determine, based on the eye level of the driver, an operating angle of the front camera (195d) or a cropping area of the forward view image (810).

3. The vehicle display apparatus (100) according to claim 1 and/or 2, wherein the processor (170) is configured to provide vehicle state information to the display (180).

4. The vehicle display apparatus (100) according to any one of claims 1 to 3, further comprising an interface unit (130) configured to receive a user input,
wherein the processor (170) is configured to
obtain vehicle-related information and a visual content (890),
divide the display (180) into multiple portions of the display (180), and
based on the user input, allocate the forward view image (810), the vehicle-related information, and the visual content (890) to each of the multiple portions of the display (180) respectively.

5. The vehicle display apparatus (100) according to any one of claims 1 to 4, further comprising:
an interface unit (130) configured to receive user input; and
a communication unit (120) configured to transmit data for display in a second display,
wherein the processor (170) is configured to determine, based on the user input, that the data for display in the second display is the forward view image (810), vehicle-related information, or visual content (890).

6. A vehicle comprising a vehicle display apparatus (100) according to any one of claims 1 to 5.

## Patentansprüche

1. Fahrzeuganzeigevorrichtung (100) umfassend:
eine Frontkamera (195d), die konfiguriert ist, ein Vorwärtssichtbild (810) vor einem Fahrzeug aufzunehmen;
eine Anzeige (180) mit einem ersten Bereich (Ar1), der auf einen Fahrersitz (Std) ausgerichtet ist, und einem zweiten Bereich (Ar2), der auf einen Beifahrersitz (Stp) ausgerichtet ist; und
einen Prozessor (170), der konfiguriert ist, für den ersten Bereich (Ar1) der Anzeige (180) (i) das von der Frontkamera (195d) erfasste Vorwärtssichtbild (810) und (ii) Reiseführungsinformationen oder Fahrzeugreiseinformationen, die dem Vorwärtssichtbild (810) überlagert sind, bereitzustellen,
wobei der Prozessor (170) konfiguriert ist, die Größe des Vorwärtssichtbildes (810) zu reduzieren, während die Fahrzeugreisegeschwindigkeit zunimmt,
wobei der Prozessor (170) konfiguriert ist, einen visuellen Inhalt (890), der von einem mobilen Endgerät eines Passagiers empfangen wird, dem zweiten Bereich (Ar2) der Anzeige (180) zur Verfügung zu stellen, wenn der Passagier auf dem Passagiersitz (Stp) anwesend ist,
wobei die Anzeige (180) eine gekrümmte Anzeigeeinheit mit mindestens einer Krümmung ist, und
wobei der erste Bereich (Ar1) der Anzeige (180), der dem Fahrersitz (Std) entspricht, die kleinste Krümmung aufweist, und beide Seitenbereiche der Anzeige (180) um die größte Krümmung gebogen sind.

2. Fahrzeuganzeigevorrichtung (100) nach Anspruch 1, die ferner eine Innenraumkamera (195e) umfasst, die konfiguriert ist, ein Bild eines Fahrers aufzunehmen,
wobei der Prozessor (170) konfiguriert ist, eine Augenhöhe des Fahrers aus dem erfassten Bild des Fahrers zu bestimmen, und
, basierend auf der Augenhöhe des Fahrers, einen Betriebswinkel der Frontkamera (195d) oder einen Ausschnittsbereich des Vorwärtssichtbildes (810) zu bestimmen.

3. Fahrzeuganzeigevorrichtung (100) nach Anspruch 1 und/oder 2, wobei der Prozessor (170) konfiguriert ist, der Anzeige (180) Fahrzeugzustandsinformationen zur Verfügung stellt.

4. Fahrzeuganzeigevorrichtung (100) nach einem der Ansprüche 1 bis 3, die ferner eine Schnittstelleneinheit (130) umfasst, die konfiguriert ist, eine Benutzereingabe zu empfangen,
wobei der Prozessor (170) konfiguriert ist,
fahrzeugbezogene Informationen und einen visuellen Inhalt zu erhalten (890),
die Anzeige (180) in mehrere Abschnitte der Anzeige (180) zu unterteilen, und
, auf der Grundlage der Benutzereingabe, das Vorwärtssichtbild (810), die fahrzeugbezogenen Informationen und den visuellen Inhalt (890) jeweils jedem der mehreren Abschnitte der Anzeige (180) zuzuordnen.

5. Fahrzeuganzeigevorrichtung (100) nach einem der Ansprüche 1 bis 4, ferner umfassend
eine Schnittstelleneinheit (130), die konfiguriert ist, Benutzereingaben zu empfangen; und
eine Kommunikationseinheit (120), die konfiguriert ist, Daten zur Anzeige in einer zweiten Anzeige zu übertragen,
wobei der Prozessor (170) konfiguriert ist, auf der Grundlage der Benutzereingabe zu bestimmen, dass die Daten zur Anzeige in der zweiten Anzeige das Vorwärtssichtbild (810), fahrzeugbezogene Informationen oder visueller Inhalt (890) sind.

6. Ein Fahrzeug mit einer Fahrzeuganzeigevorrichtung (100) nach einem der Ansprüche 1 bis 5.

## Revendications

1. Appareil d'affichage de véhicule (100) comprenant :
une caméra avant (195d) conçue pour capturer une image de visualisation avant (810) à l'avant du véhicule ;
un afficheur (180) comprenant une première zone (Ar1) orientée en direction d'un siège de conducteur (Std) et une seconde zone (Ar2) orientée en direction d'un siège de passager (Stp) ; et
un processeur (170) conçu pour fournir, à la première zone (Ar1) de l'afficheur (180), (i) l'image de visualisation avant (810) capturée par la caméra avant (195d) et (ii) des informations relatives aux instructions de déplacement ou des informations de déplacement de véhicule qui se superposent sur l'image de visualisation avant (810),
le processeur (170) étant conçu pour réduire la taille de l'image de visualisation avant (810) à mesure que la vitesse déplacement du véhicule augmente,
le processeur (170) étant conçu pour fournir un contenu visuel (890) reçu en provenance d'un terminal mobile d'un passager dans une seconde zone (Ar2) de l'afficheur (180) lorsque le passager est assis sur le siège passager (Stp),
l'afficheur (180) étant une unité d'affichage incurvée ayant au moins une courbure, et
la première zone (Ar1) de l'afficheur (180) correspondant au siège du conducteur (Std) ayant la courbure la plus courte, et les deux zones latérales de l'afficheur (180) étant incurvées selon la plus grande courbure.

2. Appareil d'affichage de véhicule (100) selon la revendication 1, comprenant en outre une caméra intérieure (195e) conçue pour capture une image d'un conducteur,
le processeur (170) étant conçu pour déterminer un niveau de l'œil du conducteur à partir de l'image capturée du conducteur, et
déterminer sur la base du niveau de l'œil du conducteur, un angle de fonctionnement de la caméra avant (195d) ou une zone de recadrage de l'image de visualisation avant (810).

3. Appareil d'affichage de véhicule (100) selon la revendication 1 ou les revendications 1 et/ou 2, le processeur (170) étant conçu pour fournir des informations d'état du véhicule à l'afficheur (180).

4. Appareil d'affichage de véhicule (100) selon l'une quelconque des revendications 1 à 3, comprenant en outre une unité d'interface (130) conçue pour recevoir une entrée d'utilisateur,
le processeur (170) étant conçu pour
obtenir des informations relatives au véhicule et un contenu visuel (890),
diviser l'afficheur (180) en plusieurs parties de l'afficheur (180), et
en fonction de l'entrée d'utilisateur, attribuer l'image de visualisation avant (810), les informations relatives au véhicule, et le contenu visuel (890) à chacune des parties de l'afficheur (180), respectivement.

5. Appareil d'affichage de véhicule (100) selon l'une quelconque des revendications 1 à 4, comprenant en outre:
une unité d'interface (130) conçue pour recevoir une entrée d'utilisateur; et
une unité de communication (120) conçue pour transmettre des données d'affichage dans un second afficheur,
le processeur (170) étant conçu pour déterminer, sur la base de l'entrée d'utilisateur, que les données d'affichage dans le second afficheur sont l'image de visualisation avant (810), les informations relatives au véhicule ou le contenu visuel (890).

6. Appareil d'affichage de véhicule (100) comprenant un appareil d'affichage de véhicules (100) selon l'une quelconque des revendications 1 à 5.
